(19) Europäisches Patentamt
European Patent Office
Office européen des brevets

(11) **EP 4 661 565 A1**

(12) **EUROPEAN PATENT APPLICATION**
published in accordance with Art. 153(4) EPC

(43) Date of publication:
**10.12.2025 Bulletin 2025/50**

(21) Application number: 24750587.8

(22) Date of filing: **01.02.2024**

(51) International Patent Classification (IPC):
*H04W 72/25* (2023.01)    *H04W 72/53* (2023.01)
*H04W 72/542* (2023.01)    *H04W 64/00* (2009.01)
*H04L 5/00* (2006.01)    *H04W 92/18* (2009.01)

(52) Cooperative Patent Classification (CPC):
H04L 5/00; H04W 64/00; H04W 72/25;
H04W 72/53; H04W 72/542; H04W 92/18

(86) International application number:
**PCT/KR2024/001528**

(87) International publication number:
**WO 2024/162790 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.02.2023 KR 20230014291**

(71) Applicant: **LG Electronics Inc.**
**Yeongdeungpo-gu
Seoul 07336 (KR)**

(72) Inventors:
• **KO, Woosuk**
  **Seoul 06772 (KR)**
• **SEO, Hanbyul**
  **Seoul 06772 (KR)**
• **LEE, Seungmin**
  **Seoul 06772 (KR)**

(74) Representative: **Plasseraud IP**
**104 Rue de Richelieu
CS92104
75080 Paris Cedex 02 (FR)**

(54) **METHOD AND APPARATUS FOR PERFORMING WIRELESS COMMUNICATION RELATED TO POSITIONING**

(57)    Proposed are a method by which a first device performs wireless communication, and an apparatus supporting same. For example, the first device may obtain PRS-related information including at least one of information about a PRS resource **ID,** information about a PRS comb offset, information about a PRS comb size, information about a PRS start symbol, or information about the number of PRS symbols. For example, the first device may obtain measurement information about a channel in a first resource pool. For example, the first device may trigger a procedure related to resource selection. For example, the first device may determine a candidate resource on the basis of an RSRP threshold value. For example, the first device may perform transmission on the basis of the candidate resource. For example, whether to increase the RSRP threshold value may be determined on the basis of the measurement information about the channel in the first resource pool.

FIG. 19

obtaining information related to PRS — S1910

obtaining measurement information related to channel within first resource pool — S1920

triggering procedure for resource selection — S1930

determining candidate resource based on RSRP threshold — S1940

performing transmission based on candidate resource — S1950

**Description**

**TECHNICAL FIELD**

This disclosure relates to a wireless communication system.

**BACKGROUND ART**

5G NR is a successor technology to long term evolution (LTE) and is a new clean-slate mobile communication system with characteristics such as high performance, low latency, high availability, etc. 5G NR may utilize all available spectrum resources, including low-frequency bands below 1 GHz, mid-frequency bands between 1 GHz and 10 GHz, high-frequency (millimeter wave) bands above 24 GHz, etc.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, (vii) connected intelligence with machine learning capacity, etc. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

[Table 1]

| Per device peak data rate | 1 Tbps |
| --- | --- |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

**DISCLOSURE**

**TECHNICAL SOLUTION**

In an embodiment, provided is a method for performing wireless communication by a first device. For example, the first device may obtain information related to a positioning reference signal (PRS), including at least one of information related to a PRS resource identity (ID), information related to a PRS comb offset, information related to a PRS comb size, information related to a PRS starting symbol, or information related to a number of PRS symbols. For example, the first device may obtain measurement information related to a channel within a first resource pool. For example, the first device may trigger a procedure for resource selection. For example, the first device may determine a candidate resource based on a reference signal received power (RSRP) threshold. For example, the first device may perform transmission based on the candidate resource. For example, whether to increase the RSRP threshold may be determined based on the measurement information related to the channel within the first resource pool.

**BRIEF DESCRIPTION OF THE DRAWINGS**

FIG. 1 shows a communication structure providable in a 6G system, based on an embodiment of the present disclosure.

FIG. 2 shows an electromagnetic spectrum, based on an embodiment of the present disclosure.

FIG. 3 shows an example of an NTN typical scenario based on a transparent payload, based on an embodiment of the present disclosure.

FIG. 4 shows an example of an NTN typical scenario based on a regenerative payload, based on an embodiment of the present disclosure.

FIG. 5 shows an example of a sensing operation, based on an embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows three cast types, based on an embodiment of the present disclosure.

FIG. 10 shows a synchronization source or synchronization reference of V2X, based on an embodiment of the present disclosure.

FIG. 11 shows an example of an architecture of a 5G system capable of positioning a UE having access to a next generation-radio access network (NG-RAN) or an E-UTRAN based on an embodiment of the present disclosure.

FIG. 12 shows an example of implementing a network for measuring a location of a UE based on an embodiment of the present disclosure.

FIG. 13 shows an example of a protocol layer used to support LTE positioning protocol (LPP) message transmission between an LMF and a UE based on an embodiment of the present disclosure.

FIG. 14 shows an example of a protocol layer used to support NR positioning protocol A (NRPPa) PDU transmission between an LMF and an NG-RAN node based on an embodiment of the present disclosure.

FIG. 15 shows an OTDOA positioning method based on an embodiment of the present disclosure.

FIG. 16 shows double-side round trip time (RTT) based on an embodiment of the present disclosure.

FIG. 17 shows a problem of performing wireless communication related to positioning, based on an embodiment of the present disclosure.

FIG. 18 shows a procedure for performing wireless communication related to positioning, based on an embodiment of the present disclosure

FIG. 19 shows a method for a first device to perform wireless communication, based on an embodiment of the present disclosure.

FIG. 20 shows a method for a second device to perform wireless communication, based on an embodiment of the present disclosure.

FIG. 21 shows a communication system 1, based on an embodiment of the present disclosure.

FIG. 22 shows wireless devices, based on an embodiment of the present disclosure.

FIG. 23 shows a signal process circuit for a transmission signal, based on an embodiment of the present disclosure.

FIG. 24 shows another example of a wireless device, based on an embodiment of the present disclosure.

FIG. 25 shows a hand-held device, based on an embodiment of the present disclosure.

FIG. 26 shows a vehicle or an autonomous vehicle, based on an embodiment of the present disclosure.

## MODE FOR INVENTION

In the present disclosure, "A or B" may mean "only A", "only B" or "both A and B". In other words, in the present disclosure, "A or B" may be interpreted as "A and/or B". For example, in the present disclosure, "A, B or C" may mean "only A", "only B", "only C", or "any combination of A, B and C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configure/configured or define/defined" may be interpreted as being configured or pre-configured for a device through pre-defined signaling (e.g., SIB, MAC, RRC) from a base station or a network. In the present disclosure, "configure/configured or define/defined" may be interpreted as being pre-configured for a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802-20, evolved UTRA (E-UTRA), long term evolution (LTE), 5G NR, and so on.

The technology proposed in the present disclosure may be implemented as 6G wireless technology and may be applied to various 6G systems. For example, the 6G system may have key factors such as enhanced mobile broadband (eMBB), ultra-reliable low latency communications (URLLC), massive machine type communications (mMTC), artificial intelligence (AI) integrated communication, tactile internet, high throughput, high network capacity, high energy efficiency, low backhaul and access network congestion, and enhanced data security.

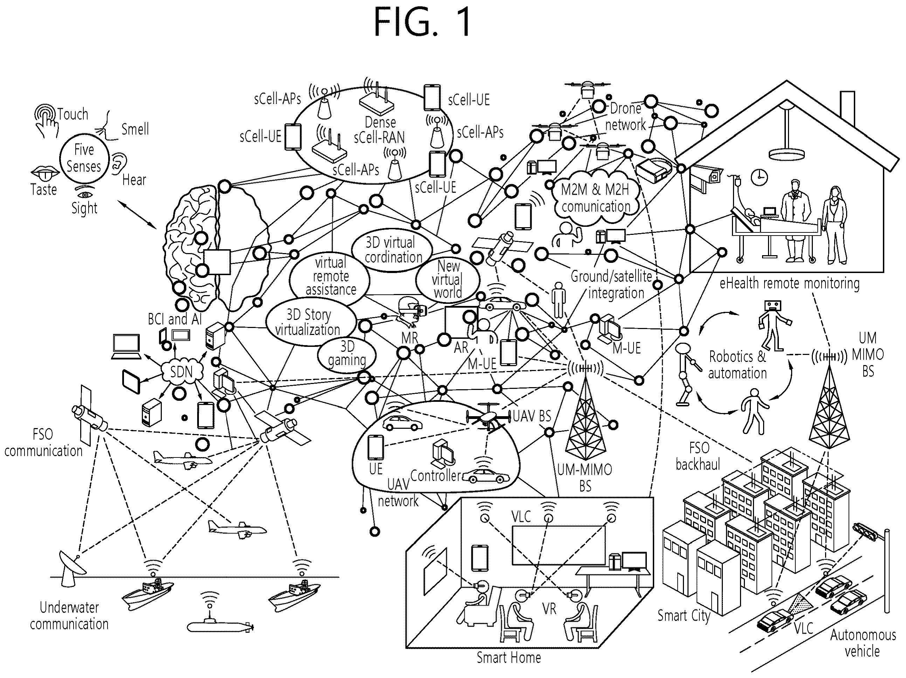

FIG. 1 shows a communication structure providable in a 6G system, based on an embodiment of the present disclosure. The embodiment of FIG. 1 may be combined with various embodiments of the present disclosure.

In 6G, new network characteristics may be as follows.

- Satellites integrated network
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.

- Small cell networks
- Ultra-dense heterogeneous network
- High-capacity backhaul

- Radar technology integrated with mobile technology: High-precision localization (or location-based service) through communication is one of the functions of the 6G wireless communication system. Accordingly, the radar system will be integrated with the 6G network.
- Softwarization and virtualization

Core implementation technology of 6G system is described below.

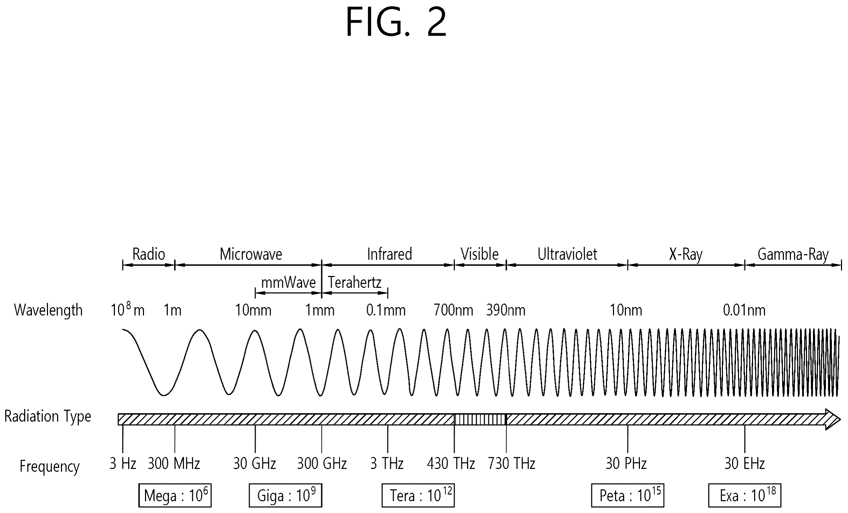

- Artificial Intelligence (AI): When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical (FSO) backhaul network
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An UAV or a drone will be an important factor in 6G wireless communication. In most cases, a high-speed data wireless connection may be provided using UAV technology. A base station (BS) entity may be installed in the UAV to provide cellular connectivity. The UAV may have certain features, which are not found in fixed BS infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communication. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Advanced air mobility (AAM): An AAM is a superordinate concept of urban air mobility (UAM), which is air transportation that can be used in an urban area, and may refer to a means of transportation that includes movement between the urban area and a regional hub.
- Autonomous driving (self-driving): Vehicle to everything (V2X) that is a core element for establishing an autonomous driving infrastructure may be a technology that vehicle communicates and shares with various elements in road for autonomous driving such as vehicle to vehicle (V2V), vehicle to infrastructure (V2I), and so on. To maximize a performance of autonomous driving and to secure high safety, high transmission speed and low latency technology have to be needed. Furthermore, in the future, autonomous driving may need to go beyond delivering warnings or guidance messages to drivers and actively intervene in vehicle operation and directly control the vehicle in dangerous situations. To this end, since the amount of information that needs to be transmitted and received may be enormous, autonomous driving is expected to be maximized in 6G being higher transmission speed and lower latency than 5G.

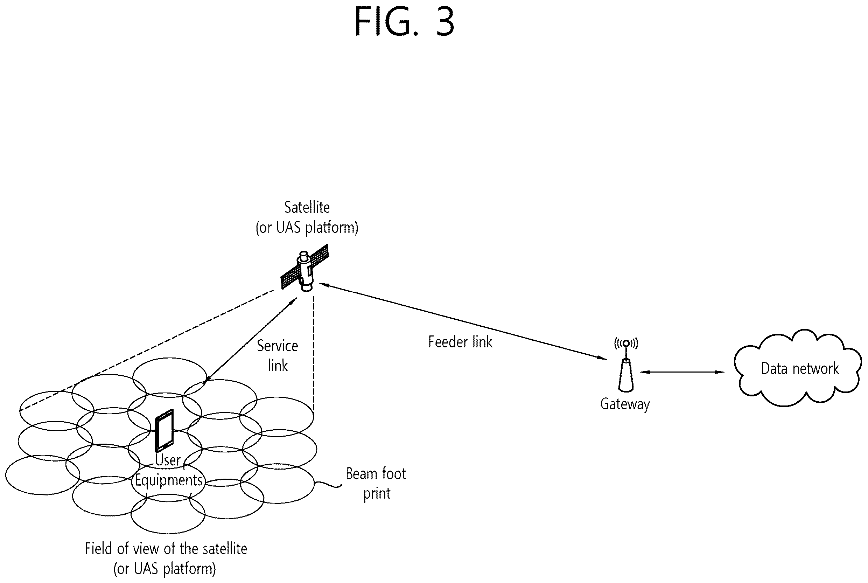

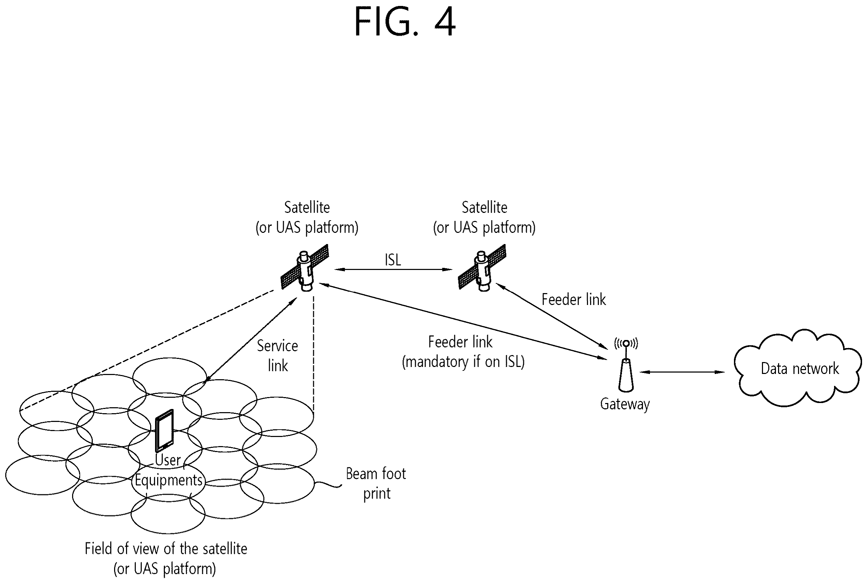

- Non-terrestrial networks (NTN): An NTN may refer to a network or a network segment that utilizes radio frequency (RF) resources aboard a satellite (or an unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or an UAS platform) may establish a service link with a UE. The satellite (or the UAS platform) may be connected with a gateway through a feeder link. The satellite may be connected with a data network through the gateway. A beam footprint may refer to an area where signals transmitted by the satellite can be received. Referring to FIG. 4, a satellite (or an UAS platform) may establish a service link with a UE. The satellite (or the UAS platform) connected with the UE may be connected with another satellite (or another UAS platform) through an inter-satellite link (ISL). Another satellite (or another UAS platform) may be connected with a gateway through a feeder link. Based on the regenerative payload, the satellite may be connected with a data network through the gateway and another satellite. If the ISL does not exist between the satellite and another satellite, a feeder link between the satellite and the gateway may be required. FIGs. 3 and 4 are only examples of NTN scenarios, and the NTN can be implemented based on various types of scenarios. For example, the satellite (or the UAS platform) may implement a transparent or regenerative (with on board processing) payload. For example, the satellite (or the UAS platform) may generate multiple beams over a specified service area based on the field of view of the satellite (or the UAS platform). For example, the field of view of the satellite (or the UAS platform) may vary depending on an on-board antenna diagram and a minimum elevation angle. For example, the transparent payload may include radio frequency filtering, frequency conversion, and amplification. Therefore, the waveform signal repeated by the payload may not be changed. For example, the regenerative payload may include radio frequency filtering, frequency conversion and amplification, demodulation/decryption, switching and/or routing, and coding/modulation. For example, the regenerative payload may be substantially equivalent to equipping the satellite (or the UAS platform) with all or part of the base station functionality.

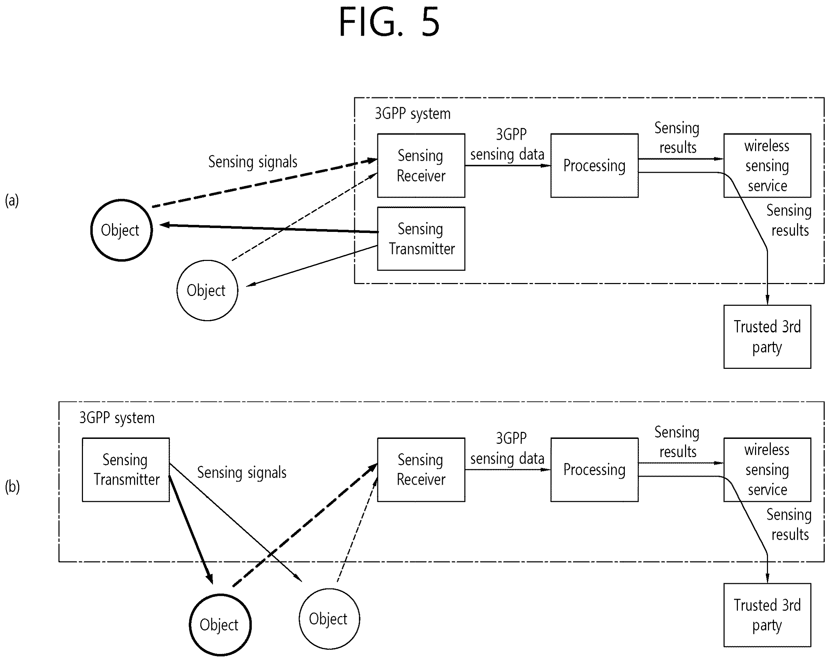

- Integrated sensing and communication (ISAC): Wireless sensing is a technology enabler to acquire information about characteristics of the environment and/or objects within the environment, that uses radio frequency to determine the distance (range), angle, or instantaneous linear velocity of objects, etc. Radio frequency sensing functionality can provide services for device-free object localization as there is lack of need for the object to be connected via a device in the network. The capabilities to obtain range, velocity, and angle information from the radio frequency signals can provide a broad range of new functionality, such as various objects detection, object recognition (e.g., vehicle, human, animal, UAV) and high accuracy localization, tracking and activity recognition. For example, the wireless sensing service may provide input to different verticals (e.g., unmanned aerial vehicle, smart home, V2X, factories, railways, public safety, etc.) enabling applications offering e.g., intruder detection, assisted automotive maneuvering and navigation, trajectory tracing, collision avoidance, traffic management, health and activity monitoring. In some cases, wireless sensing can also use non-3GPP type sensors (e.g., radar, camera) to further support the 3GPP-based sensing. For example, the operation of the wireless sensing service, i.e., sensing operation, may rely on processing the transmissions, reflections, and scattering of wireless sensing signals. Wireless sensing, therefore, may have the opportunity to enhance the legacy system from a communication network to a wireless communication and sensing network. FIG. 5 shows an example of a sensing operation, based on an embodiment of the present disclosure. The embodiment of FIG. 5 may be combined with various embodiments of the present disclosure. Specifically, (a) of FIG. 5 shows an example of sensing (e.g., monostatic sensing) with co-located sensing receiver and sensing transmitter, and (b) of FIG. 5 shows an example of sensing (e.g., bistatic sensing) with separated sensing receiver and sensing transmitter.

Layers of a radio interface protocol between the UE and the network may be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot ($N^{slot}_{symb}$), a number slots per frame ($N^{frame,u}_{slot}$), and a number of slots per subframe ($N^{subframe,u}_{slot}$) based on an SCS configuration (u), in a case where a normal CP or an extended CP is used.

[Table 2]

| CP type | SCS ($15*2^u$) | $N^{slot}_{symb}$ | $N^{frame,u}_{slot}$ | $N^{subframe,u}_{slot}$ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

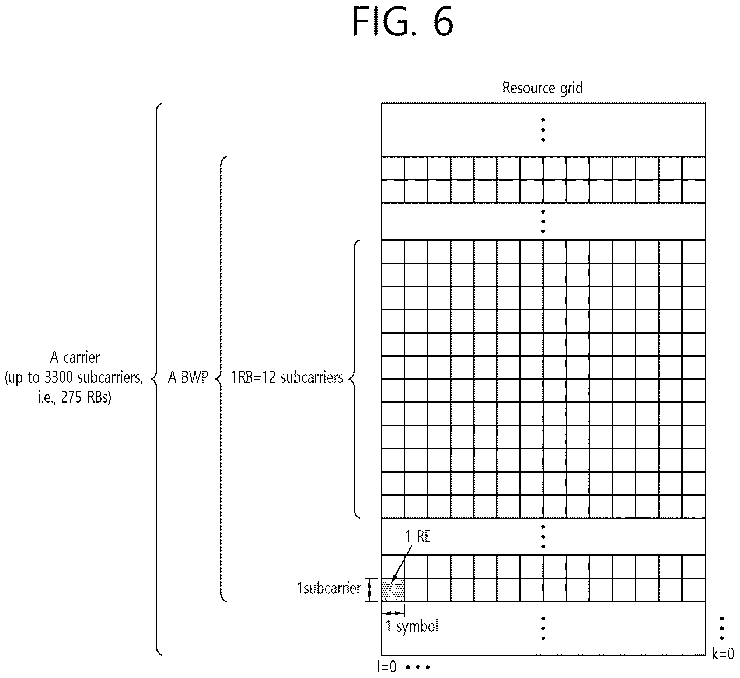

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

A bandwidth part (BWP) may be a set of consecutive physical resource blocks (PRBs) in a given numerology. The PRB may be selected from consecutive sub-sets of common resource blocks (CRBs) for the given numerology on a given carrier

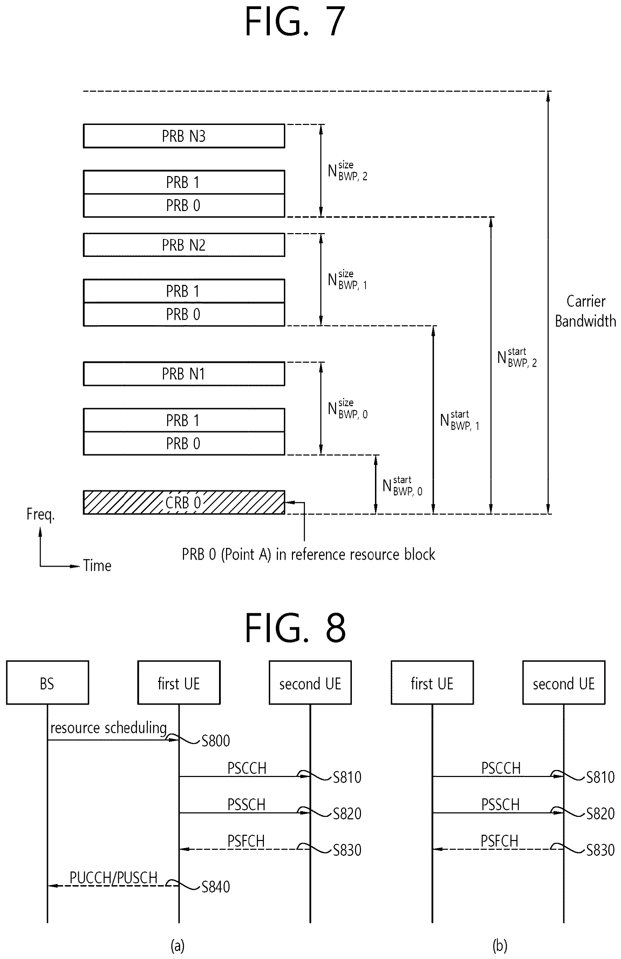

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL)-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, a PSCCH may be replaced with a control channel, a physical control channel, a control channel related to sidelink, a physical control channel related to sidelink, etc. In the present disclosure, a PSSCH may be replaced with a shared channel, a physical shared channel, a shared channel related to sidelink, a physical shared channel related to sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in a resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or $1^{st}$-stage SCI) to a second UE based on the resource scheduling. In step S820, the first UE may transmit a PSSCH (e.g., $2^{nd}$-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in a resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or $1^{st}$-stage SCI) to a second UE by using the resource(s). In step S820, the first UE may transmit a PSSCH (e.g., $2^{nd}$-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a $1^{st}$ SCI, a first SCI, a $1^{st}$-stage SCI or a $1^{st}$-stage SCI format, and a SCI transmitted through a PSSCH may be referred to as a $2^{nd}$ SCI, a second SCI, a $2^{nd}$-stage SCI or a $2^{nd}$-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, an example of a frequency range of a wireless communication system is described.

A frequency band may be defined as two different types of frequency ranges. The two different types of frequency ranges may be FR1 and FR2 (FR2-1 and/or FR2-2). The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

[Table 3]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. That is, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 may include an unlicensed band. The unlicensed band may be used for diverse purposes, e.g., including communication for vehicles (e.g. autonomous driving).

[Table 4]

| Frequency Range designation | Corresponding frequency range | Subcarrier Spacing (SCS) |
|---|---|---|
| FR1 | 410MHz - 7125MHz | 15, 30, 60kHz |
| FR2 (FR 2-1) | 24250MHz - 52600MHz | 60, 120, 240kHz |
| FR2 (FR 2-2) | 52600MHz - 71000MHz | 60, 120, 240, 480, 960 kHz |

Hereinafter, an example of SCI format 1-A will be described.

SCI format 1-A is used for the scheduling of PSSCH and 2nd-stage-SCI on PSSCH.

The following information is transmitted by means of the SCI format 1-A:

- Priority - 3 bits
- Frequency resource assignment - ceiling $(\log_2(N^{SL}_{subChannel}(N^{SL}_{subChannel}+1)/2))$ bits when the value of the higher layer parameter sl-MaxNumPerReserve is configured to 2; otherwise ceiling $\log_2(N^{SL}_{subChannel}(N^{SL}_{subChannel}+1)(2N^{SL}_{subChannel}+1)/6)$ bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling $(\log_2 N_{rsv\_period})$ bits, where $N_{rsv\_period}$ is the number of entries in the higher layer parameter sl-ResourceReservePeriodList, if higher layer parameter sl-MultiReserveResource is configured; 0 bit otherwise
- DMRS pattern - ceiling $(\log_2 N_{pattern})$ bits, where $N_{pattern}$ is the number of DMRS patterns configured by higher layer parameter sl-PSSCH-DMRS-TimePatternList
- 2nd-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

[Table 5]

| Value of 2nd-stage SCI format field | 2nd-stage SCI format |
|---|---|
| 00 | SCI format 2-A |
| 01 | SCI format 2-B |
| 10 | Reserved |
| 11 | Reserved |

[Table 6]

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

[Table 7]

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:

- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

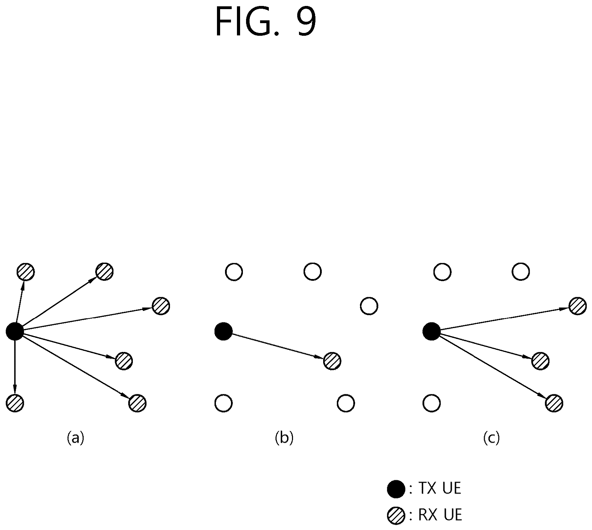

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.

(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.

(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, UE procedure for determining the subset of resources to be reported to higher layers in PSSCH resource selection in sidelink resource allocation mode 2 will be described.

In resource allocation mode 2, the higher layer can request the UE to determine a subset of resources from which the higher layer will select resources for PSSCH/PSCCH transmission. To trigger this procedure, in slot n, the higher layer provides the following parameters for this PSSCH/PSCCH transmission:

- the resource pool from which the resources are to be reported;
- L1 priority, $prio_{TX}$;
- the remaining packet delay budget;
- the number of sub-channels to be used for the PSSCH/PSCCH transmission in a slot, $L_{subCH}$;
- optionally, the resource reservation interval, $P_{rsvp\_TX}$, in units of msec.
- if the higher layer requests the UE to determine a subset of resources from which the higher layer will select resources for PSSCH/PSCCH transmission as part of re-evaluation or pre-emption procedure, the higher layer provides a set of resources $(r_0, r_1, r_2, ...)$ which may be subject to re-evaluation and a set of resources $(r'_0, r'_1, r'_2, ...)$ which may be subject to pre-emption.
- it is up to UE implementation to determine the subset of resources as requested by higher layers before or after the slot $r_i'' - T_3$, where $r_i''$ is the slot with the smallest slot index among $(r_0, r_1, r_2, ...)$ and $(r'_0, r'_1, r'_2, ...)$, and $T_3$ is equal to $T^{SL}_{proc,1}$. Herein, $T^{SL}_{proc,1}$ is defined as the number of slots based on SCS, where $\mu_{SL}$ is the SCS configuration of the SL BWP.

The following higher layer parameters affect this procedure:

- sl-SelectionWindowList: internal parameter $T_{2min}$ is set to the corresponding value from higher layer parameter sl-SelectionWindowList for the given value of $prio_{TX}$.
- sl-Thres-RSRP-List: this higher layer parameter provides an RSRP threshold for each combination $(p_i, p_j)$, where $p_i$ is the value of the priority field in a received SCI format 1-A and $p_j$ is the priority of the transmission of the UE selecting resources; for a given invocation of this procedure, $p_j = prio_{TX}$.
- sl-RS-ForSensing selects if the UE uses the PSSCH-RSRP or PSCCH-RSRP measurement.

- sl-ResourceReservePeriodList
- sl-SensingWindow: internal parameter $T_0$ is defined as the number of slots corresponding to sl-SensingWindow msec.
- sl-TxPercentageList: internal parameter X for a given $prio_{TX}$ is defined as sl-TxPercentageList ($prio_{TX}$) converted from percentage to ratio.
- sl-PreemptionEnable: if sl-PreemptionEnable is provided, and if it is not equal to 'enabled', internal parameter $prio_{pre}$ is set to the higher layer provided parameter sl-PreemptionEnable.

The resource reservation interval, $P_{rsvp\_TX}$, if provided, is converted from units of msec to units of logical slots, resulting in $P'_{rsvp\_TX}$.

Notation:

($t'^{SL}_0$, $t'^{SL}_1$, $t'^{SL}_2$, ...) denotes the set of slots which belongs to the sidelink resource pool.

For example, the UE may select a set of candidate resources ($S_A$) based on Table 8. For example, if resource (re) selection is triggered, the UE may select a set of candidate resources ($S_A$) based on Table 8. For example, if re-evaluation or pre-emption is triggered, the UE may select a set of candidate resources ($S_A$) based on Table 8.

[Table 8]

| The following steps are used: |
|---|
| 1) A candidate single-slot resource for transmission $R_{x,y}$ is defined as a set of $L_{subCH}$ contiguous sub-channels with sub-channel x+j in slot $t'^{SL}_y$ where $j$ = 0,..., $L_{subCH}$ - 1. The UE shall assume that any set of $L_{subCH}$ contiguous sub-channels included in the corresponding resource pool within the time interval [$n + T_1$, $n + T_2$] correspond to one candidate single-slot resource, where<br><br>- selection of $T_1$ is up to UE implementation under $0 \leq T_1 \leq T^{SL}_{proc,1}$, where $T^{SL}_{proc,1}$ is defined in slots in Table 8.1.4-2 where $\mu_{SL}$ is the SCS configuration of the SL BWP;<br>- if $T_{2min}$ is shorter than the remaining packet delay budget (in slots) then $T_2$ is up to UE implementation subject to $T_{2min} \leq T_2 \leq$ remaining packet delay budget (in slots); otherwise $T_2$ is set to the remaining packet delay budget (in slots).<br>The total number of candidate single-slot resources is denoted by $M_{total}$.<br>2) The sensing window is defined by the range of slots $[n - T_0, n - T^{SL}_{proc,0})$ where $T_0$ is defined above and $T^{SL}_{proc,0}$ is defined in slots in Table 8.1.4-1 where $\mu_{SL}$ is the SCS configuration of the SL BWP. The UE shall monitor slots which belongs to a sidelink resource pool within the sensing window except for those in which its own transmissions occur. The UE shall perform the behaviour in the following steps based on PSCCH decoded and RSRP measured in these slots.<br>3) The internal parameter $Th(p_i, p_j)$ is set to the corresponding value of RSRP threshold indicated by the i-th field in *sl-Thres-RSRP-List,* where $i = p_i + (p_j - 1) * 8$.<br>4) The set $S_A$ is initialized to the set of all the candidate single-slot resources.<br>5) The UE shall exclude any candidate single-slot resource $R_{x,y}$ from the set $S_A$ if it meets all the following conditions:<br><br>- the UE has not monitored slot $t'^{SL}_m$ in Step 2.<br>- for any periodicity value allowed by the higher layer parameter *sl-ResourceReservePeriodList* and a hypothetical SCI format 1-A received in slot $t'^{SL}_m$ with *'Resource reservation period'* field set to that periodicity value and indicating all subchannels of the resource pool in this slot, condition c in step 6 would be met.<br>5a) If the number of candidate single-slot resources $R_{x,y}$ remaining in the set $S_A$ is smaller than $X \cdot M_{total}$, the set $S_A$ is initialized to the set of all the candidate single-slot resources as in step 4.<br>6) The UE shall exclude any candidate single-slot resource $R_{x,y}$ from the set $S_A$ if it meets all the following conditions:<br><br>a) the UE receives an SCI format 1-A in slot $t'^{SL}_m$, and *'Resource reservation period'* field, if present, and *'Priority'* field in the received SCI format 1-A indicate the values $P_{rsvp\_RX}$ and $prio_{Rx}$, respectively;<br>b) the RSRP measurement performed, for the received SCI format 1-A, is higher than $Th(prio_{RX}, prio_{TX})$; |

(continued)

c) the SCI format received in slot $t'^{SL}_m$ or the same SCI format which, if and only if the *'Resource reservation period'* field is present in the received SCI format 1-A, is assumed to be received in slot(s)

$t'^{SL}_{m+q\times P'_{rsvp\_RX}}$ determines the set of resource blocks and slots which overlaps with $R_{x,y+j\times P'_{rsvp\_TX}}$ for $q$=1, 2, ..., $Q$ and $j$=0, 1, ..., $C_{resel}$ - 1. Here, $P'_{rsvp\_RX}$ is $P_{rsvp\_RX}$ converted to units of logical slots,

$Q = \left\lceil \frac{T_{scal}}{P_{rsvp\_RX}} \right\rceil$ if $P_{rsvp\_RX} < T_{scal}$ and $n' - m \leq P'_{rsvp\_RX}$, where $t'^{SL}_{n'} = n$ if slot $n$ belongs to the set $(t'^{SL}_0, t'^{SL}_1, \ldots, t'^{SL}_{T'_{max}-1})$, otherwise slot $t'^{SL}_{n'}$ is the first slot after slot $n$ belonging to the set $(t'^{SL}_0, t'^{SL}_1, \ldots, t'^{SL}_{T'_{max}-1})$; otherwise Q = 1. $T_{scal}$ is set to selection window size $T_2$ converted to units of msec.

7) If the number of candidate single-slot resources remaining in the set $S_A$ is smaller than $X \cdot M_{total}$, then $Th(p_i, p_j)$ is increased by 3 dB for each priority value $Th(p_i, p_j)$ and the procedure continues with step 4.

The UE shall report set $S_A$ to higher layers.

If a resource $r_i$ from the set ($r_0$, $r_1$, $r_2$, ...) is not a member of $S_A$, then the UE shall report re-evaluation of the resource $r_i$ to higher layers.

If a resource $r'_i$ from the set $(r'_0, r'_1, r'_2, \ldots)$ meets the conditions below then the UE shall report pre-emption of the resource $r'_i$ to higher layers

- $r'_i$ is not a member of $S_A$, and

- $r'_i$ meets the conditions for exclusion in step 6, with $Th(prio_{RX}, prio_{TX})$ set to the final threshold after executing steps 1)-7), i.e. including all necessary increments for reaching $X \cdot M_{total}$, and

- the associated priority $prio_{RX}$, satisfies one of the following conditions:
    - sl-*PreemptionEnable* is provided and is equal to 'enabled' and $prio_{TX} > prio_{RX}$
    - sl-*PreemptionEnable* is provided and is not equal to 'enabled', and $prio_{RX} < prio_{pre}$ and $prio_{TX} > prio_{RX}$

Meanwhile, partial sensing may be supported for power saving of the UE. For example, in LTE SL or LTE V2X, the UE may perform partial sensing based on Tables 9 and 10.

[Table 9]

| |
|---|
| In sidelink transmission mode 4, when requested by higher layers in subframe n for a carrier, the UE shall determine the set of resources to be reported to higher layers for PSSCH transmission according to the steps described in this Subclause. |
| Parameters $L_{subCH}$ the number of sub-channels to be used for the PSSCH transmission in a subframe, $P_{rsvp\_TX}$ the resource reservation interval, and $prio_{TX}$ the priority to be transmitted in the associated SCI format 1 by the UE are all provided by higher layers. |

(continued)

In sidelink transmission mode 3, when requested by higher layers in subframe n for a carrier, the UE shall determine the set of resources to be reported to higher layers in sensing measurement according to the steps described in this Subclause. Parameters $L_{subCH}$, $P_{rsvp\_TX}$ and $prio_{TX}$ are all provided by higher layers. $C_{resel}$ is determined by $C_{resel}$=10*SL_RESOURCE _RESELECTION_COUNTER, where SL_RESOURCE_RESELECTION_COUNTER is provided by higher layers.

...

If partial sensing is configured by higher layers then the following steps are used:

1) A candidate single-subframe resource for PSSCH transmission $R_{x,y}$ is defined as a set of $L_{subCH}$ contiguous sub-channels with sub-channel x+j in subframe $t_y^{SL}$ where $j$ = 0, ..., $L_{subCH}$ - 1. The UE shall determine by its implementation a set of subframes which consists of at least Y subframes within the time interval [$n + T_1$, n + $T_2$] where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement and Y shall be greater than or equal to the high layer parameter *minNumCandidateSF*. The UE shall assume that any set of $L_{subCH}$ contiguous sub-channels included in the corresponding PSSCH resource pool within the determined set of subframes correspond to one candidate single-subframe resource. The total number of the candidate single-subframe resources is denoted by $M_{total}$.

2) If a subframe $t_y^{SL}$ is included in the set of subframes in Step 1, the UE shall monitor any subframe $t_{y-k \times P_{step}}^{SL}$ if k-th bit of the high layer parameter *gapCandidateSensing* is set to 1. The UE shall perform the behaviour in the following steps based on PSCCH decoded and S-RSSI measured in these subframes.

3) The parameter $Th_{a,b}$ is set to the value indicated by the i-th *SL-ThresPSSCH-RSRP* field in *SL-ThresPSSCH-RSRP-List* where i = (a - 1) * 8 + b.

4) The set $S_A$ is initialized to the union of all the candidate single-subframe resources. The set $S_B$ is initialized to an empty set.

5) The UE shall exclude any candidate single-subframe resource $R_{x,y}$ from the set $S_A$ if it meets all the following conditions:

- the UE receives an SCI format 1 in subframe $t_m^{SL}$ , and "Resource reservation" field and "Priority" field in the received SCI format 1 indicate the values $P_{rsvp\_RX}$ and $prio_{RX}$, respectively.
- PSSCH-RSRP measurement according to the received SCI format 1 is higher than $Th_{prioTX,prioRX}$.
- the SCI format received in subframe $t_m^{SL}$ or the same SCI format 1 which is assumed to be received in subframe(s) $t_{m+q \times P_{step} \times P_{rsvp\_RX}}^{SL}$ determines according to 14.1.1.4C the set of resource blocks and subframes which overlaps with $R_{x,y+j \times P'_{rvsp\_TX}}$ for q=1, 2, ..., Q and j=0, 1, ..., $C_{resel}$ - 1. Here, $Q = \frac{1}{P_{rsvp\_RX}}$ if $P_{rsvp\_RX}$ < 1 and y' - m $\leq P_{step} \times P_{rsvp\_RX} + P_{step}$, where $t_{y'}^{SL}$ is the last subframe of the Y subframes , and Q = 1 otherwise.

6) If the number of candidate single-subframe resources remaining in the set $S_A$ is smaller than $0.2 \cdot M_{total}$, then Step 4 is repeated with $Th_{a,b}$ increased by 3 dB.

[Table 10]

7) For a candidate single-subframe resource $R_{x,y}$ remaining in the set $S_A$, the metric $E_{x,y}$ is defined as the linear average of S-RSSI measured in sub-channels x+k for k = 0,..., $L_{subCH}$ - 1 in the monitored subframes in Step 2 that can be expressed by $t_{y-P_{step}*j}^{SL}$ for a non-negative integer j.

8) The UE moves the candidate single-subframe resource $R_{x,y}$ with the smallest metric $E_{x,y}$ from the set $S_A$ to $S_B$. This step is repeated until the number of candidate single-subframe resources in the set $S_B$ becomes greater than or equal to $0.2 \cdot M_{total}$.

(continued)

9) When the UE is configured by upper layers to transmit using resource pools on multiple carriers, it shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

If transmission based on random selection is configured by upper layers and when the UE is configured by upper layers to transmit using resource pools on multiple carriers, the following steps are used:

1) A candidate single-subframe resource for PSSCH transmission $R_{x,y}$ is defined as a set of $L_{subCH}$ contiguous sub-channels with sub-channel $x+j$ in subframe $t_y^{SL}$ where $j = 0,..., L_{subCH}$ - 1. The UE shall assume that any set of $L_{subCH}$ contiguous sub-channels included in the corresponding PSSCH resource pool within the time interval [$n + T_1$, n + $T_2$] corresponds to one candidate single-subframe resource, where selections of $T_1$ and $T_2$ are up to UE implementations under $T_1 \leq 4$ and $T_{2min}(prio_{TX}) \leq T_2 \leq 100$, if $T_{2min}(prio_{TX})$ is provided by higher layers for $prio_{TX}$, otherwise $20 \leq T_2 \leq 100$. UE selection of $T_2$ shall fulfil the latency requirement. The total number of the candidate single-subframe resources is denoted by $M_{total}$.

2) The set $S_A$ is initialized to the union of all the candidate single-subframe resources. The set $S_B$ is initialized to an empty set.

3) The UE moves the candidate single-subframe resource $R_{x,y}$ from the set $S_A$ to $S_B$.

4) The UE shall exclude a candidate single-subframe resource $R_{x,y}$ from $S_B$ if the UE does not support transmission in the candidate single-subframe resource in the carrier under the assumption that transmissions take place in other carrier(s) using the already selected resources due to its limitation in the number of simultaneous transmission carriers, its limitation in the supported carrier combinations, or interruption for RF retuning time.

The UE shall report set $S_B$ to higher layers.

Hereinafter, synchronization acquisition of a SL UE will be described.

In time division multiple access (TDMA) and frequency division multiple access (FDMA) systems, accurate time and frequency synchronization is essential. If the time and frequency synchronization is not accurate, system performance may be degraded due to inter symbol interference (ISI) and inter carrier interference (ICI). The same is true for V2X. In V2X, for time/frequency synchronization, sidelink synchronization signal (SLSS) may be used in a physical layer, and master information block-sidelink-V2X (MIB-SL-V2X) may be used in a radio link control (RLC) layer.

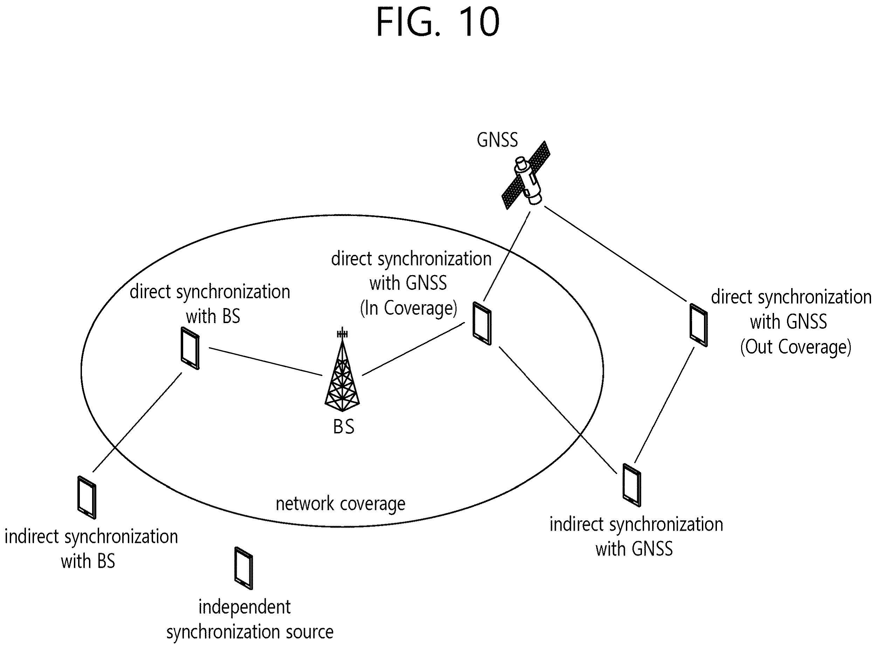

FIG. 10 shows a synchronization source or synchronization reference of V2X, based on an embodiment of the present disclosure. The embodiment of FIG. 10 may be combined with various embodiments of the present disclosure.

Referring to FIG. 10, in V2X, a UE may be directly synchronized with a global navigation satellite system (GNSS), or may be indirectly synchronized with the GNSS through a UE (inside network coverage or outside network coverage) directly synchronized with the GNSS. If the GNSS is configured as the synchronization source, the UE may calculate a DFN and a subframe number by using a coordinated universal time (UTC) and a (pre-)configured direct frame number (DFN) offset.

Alternatively, the UE may be directly synchronized with a BS, or may be synchronized with another UE which is time/frequency-synchronized with the BS. For example, the BS may be an eNB or a gNB. For example, if the UE is inside the network coverage, the UE may receive synchronization information provided by the BS, and may be directly synchronized with the BS. Thereafter, the UE may provide the synchronization information to adjacent another UE. If BS timing is configured based on synchronization, for synchronization and downlink measurement, the UE may be dependent on a cell related to a corresponding frequency (when it is inside the cell coverage at the frequency), or a primary cell or a serving cell (when it is outside the cell coverage at the frequency).

The BS (e.g., serving cell) may provide a synchronization configuration for a carrier used in V2X or SL communication. In this case, the UE may conform to the synchronization configuration received from the BS. If the UE fails to detect any cell in a carrier used in the V2X or SL communication and fails to receive the synchronization configuration from the serving cell, the UE may conform to a pre-configured synchronization configuration.

Alternatively, the UE may be synchronized with another UE which fails to obtain synchronization information directly or indirectly from the BS or the GNSS. A synchronization source or preference may be pre-configured to the UE. Alternatively, the synchronization source and preference may be configured through a control message provided by the BS.

A SL synchronization source may be associated/related with a synchronization priority. For example, a relation between the synchronization source and the synchronization priority may be defined as shown in Table 11 or Table 12. Table 11 or Table 12 are for exemplary purposes only, and the relation between the synchronization source and the synchronization priority may be defined in various forms.

[Table 11]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | All other UEs | GNSS |
| P4 | N/A | All UEs directly synchronized with GNSS |
| P5 | N/A | All UEs indirectly synchronized with GNSS |
| P6 | N/A | All other UEs |

[Table 12]

| Priority level | GNSS-based synchronization | eNB/gNB-based synchronization |
|---|---|---|
| P0 | GNSS | BS |
| P1 | All UEs directly synchronized with GNSS | All UEs directly synchronized with BS |
| P2 | All UEs indirectly synchronized with GNSS | All UEs indirectly synchronized with BS |
| P3 | BS | GNSS |
| P4 | All UEs directly synchronized with BS | All UEs directly synchronized with GNSS |
| P5 | All UEs indirectly synchronized with BS | All UEs indirectly synchronized with GNSS |
| P6 | Remaining UE(s) having low priority | Remaining UE(s) having low priority |

In Table 11 or Table 12, P0 may denote a highest priority, and P6 may denote a lowest priority. In Table 11 or Table 12, the BS may include at least one of a gNB and an eNB. Whether to use GNSS-based synchronization or BS-based synchronization may be (pre-)configured. In a single-carrier operation, the UE may derive transmission timing of the UE from an available synchronization reference having the highest priority.

For example, the UE may (re)select a synchronization reference, and the UE may obtain synchronization from the synchronization reference. In addition, the UE may perform SL communication (e.g., PSCCH/PSSCH transmission/-reception, physical sidelink feedback channel (PSFCH) transmission/reception, S-SSB transmission/reception, reference signal transmission/reception, etc.) based on the obtained synchronization.

Hereinafter, positioning will be described.

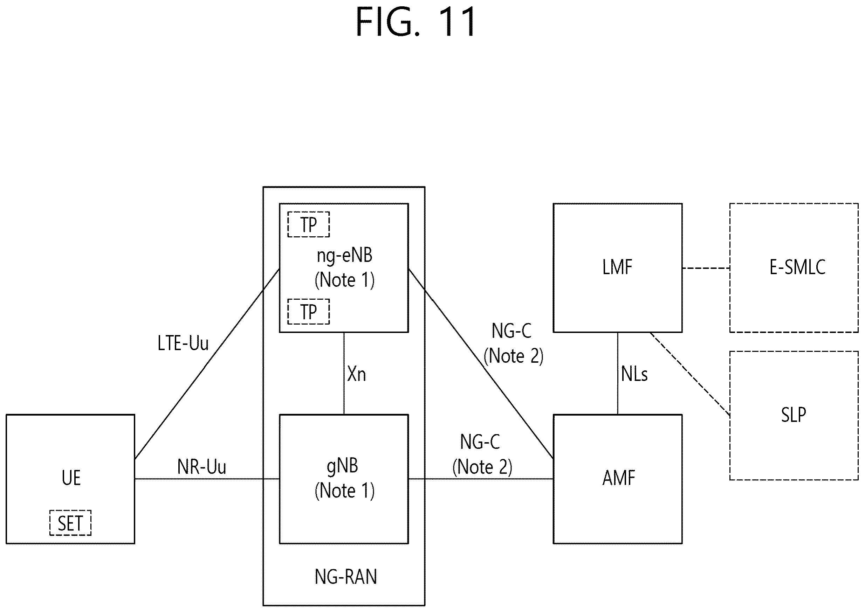

FIG. 11 shows an example of an architecture of a 5G system capable of positioning a UE having access to a next generation-radio access network (NG-RAN) or an E-UTRAN based on an embodiment of the present disclosure. The embodiment of FIG. 11 may be combined with various embodiments of the present disclosure.

Referring to FIG. 11, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated location or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for location estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centre (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a location estimation value for the target UE and accuracy of location estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a location of the UE. For example, the UE may include an independent positioning function such as a global positioning system (GPS), and may report the location of the UE independent of NG-RAN transmission. Positioning information obtained independently as such may be utilized as assistance information of the positioning information obtained from the network.

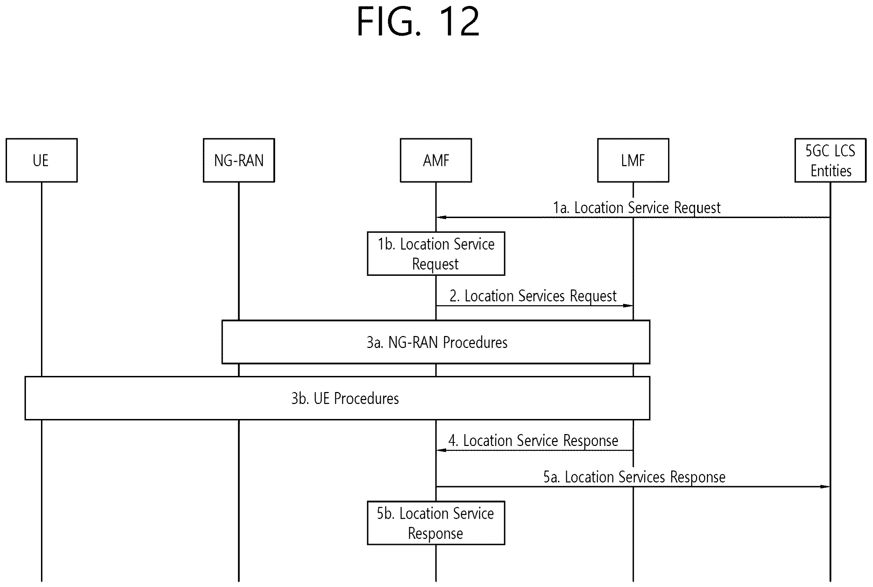

FIG. 12 shows an example of implementing a network for measuring a location of a UE based on an embodiment of the present disclosure. The embodiment of FIG. 12 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 12. That is, it may be assumed in FIG. 12 that the UE is in a connected mode. However, due to signaling and data inactivation or the like, the signaling connection may be released by NG-RAN while a positioning process is performed.

A network operation process for measuring a location of a UE will be described in detail with reference to FIG. 12. In step a1, a 5GC entity such as GMLC may request a serving AMF to provide a location service for measuring a location of a target UE. However, even if the GMLC does not request for the location service, based on step 1b, the serving AMF may determine that the location service for measuring the location of the target UE is required. For example, to measure the location of the UE for an emergency call, the serving AMF may determine to directly perform the location service.

Thereafter, the AMF may transmit the location service request to an LMF based on step 2, and the LMF may start location procedures to obtain location measurement data or location measurement assistance data together with a serving ng-eNB and a serving gNB. Additionally, based on step 3b, the LMF may start location procedures for downlink positioning together with the UE. For example, the LMF may transmit assistance data defined in 3GPP TS 36.355, or may obtain a location estimation value or a location measurement value. Meanwhile, step 3b may be performed additionally after step 3a is performed, or may be performed instead of step 3a.

In step 4, the LMF may provide a location service response to the AMF. In addition, the location service response may include information on whether location estimation of the UE is successful and a location estimation value of the UE. Thereafter, if the procedure of FIG. 12 is initiated by step a1, the AMF may transfer the location service response to a 5GC entity such as GMLC, and if the procedure of FIG. 12 is initiated by step 1b, the AMF may use the location service response to provide a location service related to an emergency call or the like.

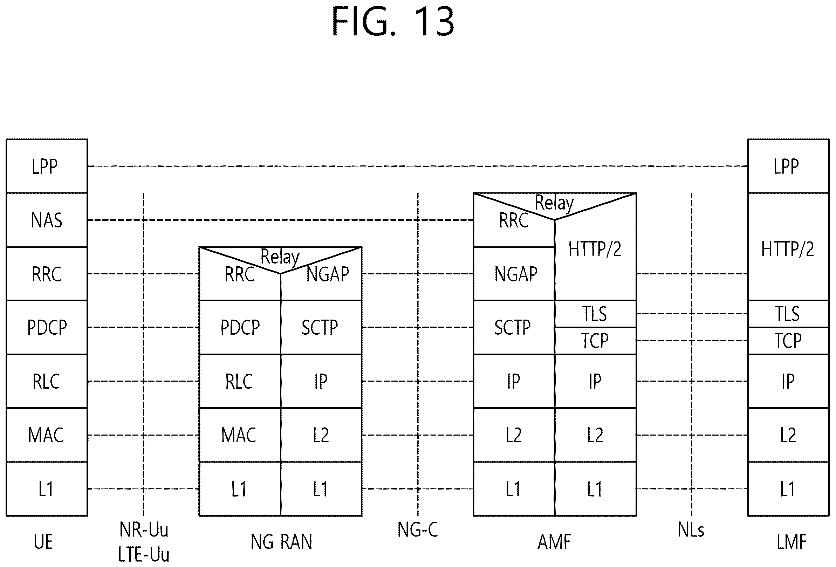

FIG. 13 shows an example of a protocol layer used to support LTE positioning protocol (LPP) message transmission between an LMF and a UE based on an embodiment of the present disclosure. The embodiment of FIG. 13 may be combined with various embodiments of the present disclosure.

An LPP PDU may be transmitted through a NAS PDU between an AMF and the UE. Referring to FIG. 13, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

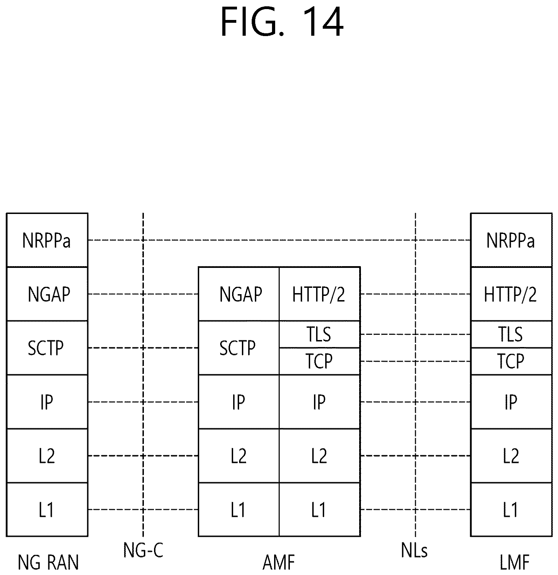

FIG. 14 shows an example of a protocol layer used to support NR positioning protocol A (NRPPa) PDU transmission between an LMF and an NG-RAN node based on an embodiment of the present disclosure. The embodiment of FIG. 14 may be combined with various embodiments of the present disclosure.

The NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., location measurement information or the like), and a second type is a non UE associated procedure for transferring information (e.g., gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

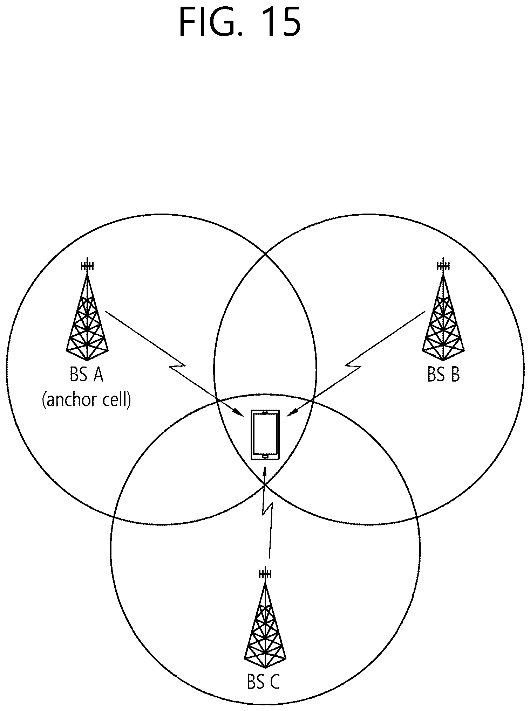

FIG. 15 shows an OTDOA positioning method based on an embodiment of the present disclosure. The embodiment of FIG. 15 may be combined with various embodiments of the present disclosure.

The OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a location of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a location of a UE. In this case, since accuracy and/or uncertainty for each TOA measurement may be present, the estimated location of the UE may be known as a specific range based on measurement uncertainty.

For example, RSTD for two TPs may be calculated based on Equation 1.

[Equation 1]

$$RSTDi, 1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, {xt, yt} may be a (unknown) coordinate of a target UE, {xi, yi} may be a coordinate of a (known) TP, and {x1, y1} may be a coordinate of a reference TP (or another TP). Herein, (Ti-T1) may be referred to as "real time differences (RTDs)" as a transmission time offset between two TPs, and ni, n1 may represent values related to UE TOA measurement errors.

(2) E-CID (Enhanced Cell ID)

In a cell ID (CID) positioning method, a location of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE location estimation value. In the E-CID positioning method, although some of the measurement methods which are the same as those used in a measurement control system of an RRC protocol may be used, additional measurement is not performed in general only for location measurement of the UE. In other words, a measurement configuration or a measurement control message may not be provided additionally to measure the location of the UE. Also, the UE may not expect that an additional measurement operation only for location measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

Meanwhile, AoA may be used to measure a direction of the UE. The AoA may be defined as an estimation angle with respect to the location of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a location of a UE by estimating an arrival time of SRS. When calculating an estimated SRS arrival time, the location of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

(4) Round Trip Time (RTT)

RTT is a positioning technique that can measure a distance between two entities even if a target entity and a server entity are out of time synchronization. If RTT is performed with multiple server entities, distances from each of the server entities may be measured separately. In addition, by drawing circles using the distances measured from each of the server entities, absolute positioning of the target entity may be performed by the intersection point of the circles.

RTT between two entities is performed by the following method. An entity #1 may transmit a PRS #1 at t1, and an entity #2 may receive the PRS #1 at t2. After the PRS #1 is received by the entity #2, the entity #2 may transmit a PRS #2 at t3, and the entity #1 may receive the PRS #2 at t4. In this case, a distance D between the two entities may be obtained as follows.

$$D = c \times \{(t_4 - t_1) - (t_3 - t_2)\}/2 \ (where \ c \ is \ the \ speed \ of \ light)$$

(where c is the speed of light)

For RTT between the UE and the gNB, a distance between the UE and the gNB may be obtained based on the Equation above using UE Rx - Tx time difference and gNB Rx - Tx time difference in the tables 16 and 18 below.

(5) Double-side RTT

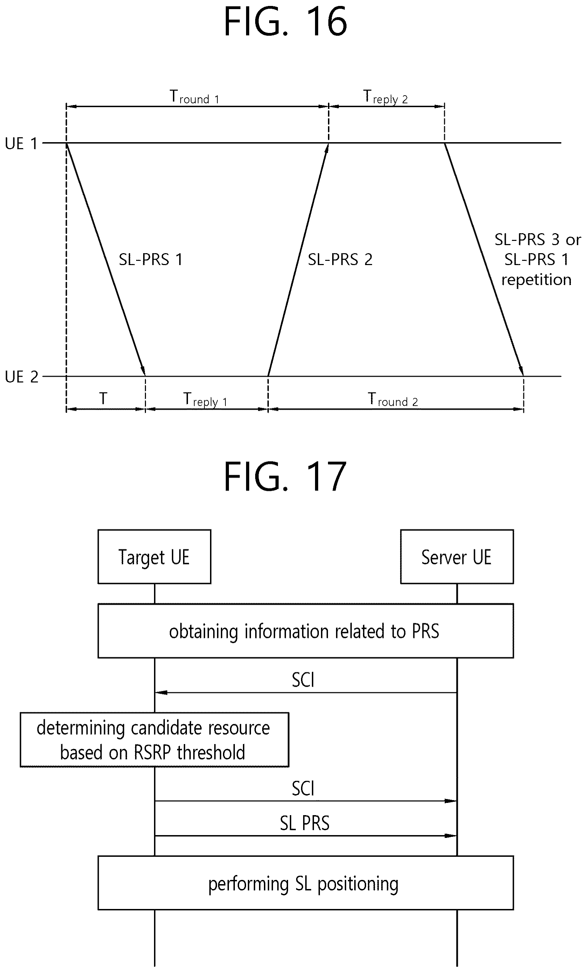

FIG. 16 shows double-side round trip time (RTT) based on an embodiment of the present disclosure. The embodiment of FIG. 16 may be combined with various embodiments of the present disclosure.

For example, a method for performing double-side RTT between two entities may be as follows.

For example, double-side RTT may be a positioning technology that can measure a distance between two entities even if a sampling clock frequency offset exists between a target entity and a server entity.

For example, double-side RTT is widely used in ultra-wideband (UWB) positioning and can reduce the influence of clock error.

For example, the propagation delay T^ may be estimated by two measurements (e.g., $T_{round1}$, $T_{round2}$, $T_{reply1}$, $T_{reply2}$).

For example, the propagation delay T(T^) may be calculated based on Equation 2.

[Equation 2]

$$\hat{T} = \frac{1}{2}(T_{round1} - T_{reply1})$$

For example, the propagation delay T(T^) may be calculated based on Equation 3.

[Equation 3]

$$\hat{T} = \frac{1}{2}(T_{round2} - T_{reply2})$$

In addition, $T_{round1} \times T_{round2} - T_{reply1} \times T_{reply2}$ may be obtained based on Equation 4.

[Equation 4]

$$T_{round1} \times T_{round2} - T_{reply1} \times T_{reply2} = 4\hat{T}^2 + 2\hat{T}(T_{reply1} + T_{reply2}) = \hat{T}(T_{round1} + T_{round2} + T_{reply1} + T_{reply2})$$

Herein, Equation 4 may be the same as Equation 5.

[Equation 5]

$$T_{round1} \times T_{round2} = (2\hat{T} + T_{reply1})(2\hat{T} + T_{reply2}) = 4\hat{T}^2 + 2\hat{T}(T_{reply1} + T_{reply2}) + T_{reply1} \times T_{reply2}$$

Therefore, the propagation delay T(T^) can be estimated as shown in Equation 6.

[Equation 6]

$$\hat{T} = \frac{T_{round1} \times T_{round2} - T_{reply1} \times T_{reply2}}{(T_{round1} + T_{round2} + T_{reply1} + T_{reply2})}$$

In this case, the error of propagation delay estimation due to clock error may be obtained based on Equation 7.

[Equation 7]

$$error = \hat{T} - T \approx \frac{(e_{UE1} + e_{UE2})}{2}\hat{T}$$

Herein, $e_{UE1}$ and $e_{UE2}$ may be the clock offset of UE 1 and UE 2.

T(T^) may be estimated propagation delay between UE1 and UE 2.

For example, Table 13 shows the definition and examples of use of reference signal time difference (RSTD).

[Table 13]

| Definition | The relative timing difference between the E-UTRA neighbour cell j and the E-UTRA reference cell i, defined as $T_{SubframeRxj}$ - $T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
|---|---|

(continued)

| Applicable for | RRC CONNECTED inter-RAT |
|---|---|

Table 14 shows the definition and examples of use of DL PRS reference signal received power (RSRP).

[Table 14]

| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| Applicable for | RRC _CONNECTED intra-frequency, RRC _CONNECTED inter-frequency |

Table 15 shows the definition and examples of use of DL relative signal time difference (RSTD).

[Table 15]

| Definition | DL relative timing difference (DL RSTD) between the positioning node j and the reference positioning node i, is defined as $T_{SubframeRxj}$ - TsubframeRxi, Where: $T_{SubframeRxj}$ is the time when the UE receives the start of one subframe from positioning node j. $T_{SubframeRxi}$ is the time when the UE receives the corresponding start of one subframe from positioning node i that is closest in time to the subframe received from positioning node *j*. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|
| Applicable for | RRC _CONNECTED intra-frequency RRC _CONNECTED inter-frequency |

Table 16 shows the definition and examples of use of UE Rx-Tx time difference.

[Table 16]

| Definition | The UE Rx - Tx time difference is defined as $T_{UE-RX}$ - $T_{UE-TX}$ Where: $T_{UE-RX}$ is the UE received timing of downlink subframe #i from a positioning node, defined by the first detected path in time. $T_{UE-TX}$ is the UE transmit timing of uplink subframe #*j* that is closest in time to the subframe #i received from the positioning node. Multiple DL PRS resources can be used to determine the start of one subframe of the first arrival path of the positioning node. For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be |
|---|---|
| | the Rx antenna of the UE and the reference point for $T_{UE-TX}$ measurement shall be the Tx antenna of the UE. |
| Applicable for | RRC _CONNECTED intra-frequency RRC _CONNECTED inter-frequency |

Table 17 shows the definition and examples of use of UL Relative Time of Arrival (UL RTOA) ($T_{UL\text{-}RTOA}$).

[Table 17]

| Definition | [The UL Relative Time of Arrival ($T_{UL\text{-}RTOA}$) is the beginning of subframe i containing SRS received in positioning node *j*, relative to the configurable reference time.]<br>Multiple SRS resources for positioning can be used to determine the beginning of one subframe containing SRS received at a positioning node.<br>The reference point for $T_{UL\text{-}RTOA}$ shall be:<br>- for type 1-C base station TS 38.104 [9]: the Rx antenna connector,<br>- for type 1-O or 2-O base station TS 38.104 [9]: the Rx antenna,<br>- for type 1-H base station TS 38.104 [9]: the Rx Transceiver Array Boundary connector. |
|---|---|

Table 18 shows the definition and examples of use of gNB Rx-Tx time difference.

[Table 18]

| Definition | The gNB Rx - Tx time difference is defined as $T_{gNB\text{-}RX}$ - $T_{gNB\text{-}TX}$<br>Where:<br>$T_{gNB\text{-}RX}$ is the positioning node received timing of uplink subframe #i containing SRS associated with UE, defined by the first detected path in time.<br>$T_{gNB\text{-}TX}$ is the positioning node transmit timing of downlink subframe #*j* that is closest in time to the subframe #i received from the UE.<br>Multiple SRS resources for positioning can be used to determine the start of one subframe containing SRS. The reference point for $T_{gNB\text{-}RX}$ shall be:<br>- for type 1-C base station TS 38.104 [9]: the Rx antenna connector,<br>- for type 1-O or 2-O base station TS 38.104 [9]: the Rx antenna,<br>- for type 1-H base station TS 38.104 [9]: the Rx Transceiver Array Boundary connector. The reference point for $T_{gNB\text{-}TX}$ shall be:<br>- for type 1-C base station TS 38.104 [9]: the Tx antenna connector,<br>- for type 1-O or 2-O base station TS 38.104 [9]: the Tx antenna,<br>- for type 1-H base station TS 38.104 [9]: the Tx Transceiver Array Boundary connector. |
|---|---|

Table 19 shows the definition and examples of use of UL Angle of Arrival (AoA).

[Table 19]

| Definition | UL Angle of Arrival (UL AoA) is defined as the estimated azimuth angle and vertical angle of a UE with respect to a reference direction, wherein the reference direction is defined:<br>- In the global coordinate system (GCS), wherein estimated azimuth angle is measured relative to geographical North and is positive in a counter-clockwise direction and estimated vertical angle is measured relative to zenith and positive to horizontal direction<br>- In the local coordinate system (LCS), wherein estimated azimuth angle is measured relative to x-axis of LCS and positive in a counter-clockwise direction and estimated vertical angle is measured relatize to z-axis of LCS and positive to x-y plane direction. The bearing, downtilt and slant angles of LCS are defined according to TS 38.901 [14].<br>The UL AoA is determined at the gNB antenna for an UL channel corresponding to this UE. |
|---|---|

Table 20 shows the definition and examples of use of UL SRS reference signal received power (RSRP).

[Table 20]

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. |
|---|---|
| | For frequency range 1, the reference point for the UL SRS-RSRP shall be the antenna connector of the gNB. For frequency range 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |

In embodiment(s) of the present disclosure, a positioning mode may be disclosed. For example, the positioning mode may include standalone, UE-based, or UE-assisted. For example, the stand alone may refer to a positioning mode that determines one's position based on GNSS without PRS (without correction of positioning error through PRS). For example, X of "X-based" and "X-assisted" may refer respectively to a node responsible for positioning calculation (and optionally providing measurements), and a node that provides measurements (without performing positioning calculation). Thus, for example, the operation(s) in which measurements used in the calculation of position estimation are provided by the UE to the LMF may be described as "UE-assisted" (and may also be called "LMF-based"), whereas the operations(s) in which the UE calculates its own position may be described as "UE-based".

For example, Tables 21 to 23 show an example of PRS Assistance Data.

[Table 21]

| - NR-DL-PRS-AssistanceData |
|---|
| The IE NR-DL-PRS-AssistanceData is used by the location server to provide DL-PRS assistance data. |
| NOTE 1: The location server should include at least one TRP for which the SFN can be obtained by the target device, e.g. the serving TRP. |
| NOTE 2: The nr-DL-PRS-ReferenceInfo defines the "assistance data reference" TRP whose DL-PRS configuration is included in nr-DL-PRS-AssistanceDataList. The nr-DL-PRS-SFN0-Offset's and nr-DL-PRS-expectedRSTD's in nr-DL-PRS-AssistanceDataList are provided relative to the "assistance data reference" TRP. |
| NOTE 3: The network signals a value of zero for the nr-DL-PRS-SFN0-Offset, nr-DL-PRS-expectedRSTD, and nr-DL-PRS-expectedRSTD-uncertainty of the "assistance data reference" TRP in nr-DL-PRS-AssistanceDataList. |
| NOTE 4: For NR DL-TDOA positioning (see clause 6.5.10) the nr-DL-PRS-ReferenceInfo defines also the requested "RSTD reference". |
| For DL-PRS processing, the LPP layer may inform lower layers to start performing DL-PRS measurements and provide to lower layers the information about the location of DL-PRS, e.g. DL-PRS-PointA, DL-PRS Positioning occasion information. |

[Table 22]

```
-- ASNISTART
 NR-DL-PRS-AssistanceData-r16 ::= SEQUENCE {
 nr-DL-PRS-ReferenceInfo-r16 DL-PRS-ID-Info-r16,
 nr-DL-PRS-AssistanceDataList-r16 SEQUENCE (SIZE (1..nrMaxFreqLayers-r16)) OF
 NR-DL-PRS-AssistanceDataPerFreq-r16,
 nr-SSB-Config-r16 SEQUENCE (SIZE (1..nrMaxTRPs-r16)) OF
 NR-SSB-Config-r16 OPTIONAL, -- Need ON
 }
 NR-DL-PRS-AssistanceDataPerFreq-r16 ::= SEQUENCE {
 nr-DL-PRS-PositioningFrequencyLayer-r16
 NR-DL-PRS-PositioningFrequencyLayer-r16,
```

(continued)

```
nr-DL-PRS-AssistanceDataPerFreq-r16 SEQUENCE (SIZE (1..nrMaxTRPsPerFreq-r16)) OF
NR-DL-PRS-AssistanceDataPerTRP-r16,
}
NR-DL-PRS-AssistanceDataPerTRP-r16 ::= SEQUENCE {
dl-PRS-ID-r16 INTEGER (0..255),
nr-PhysCellID-r16 NR-PhysCellID-r16 OPTIONAL, -- Need ON
nr-CellGlobalID-r16 NCGI-r15 OPTIONAL, -- Need ON
nr-ARFCN-r16 ARFCN-ValueNR-r15 OPTIONAL, -- Need ON
nr-DL-PRS-SFN0-Offset-r16 NR-DL-PRS-SFN0-Offset-r16,
nr-DL-PRS-ExpectedRSTD-r16 INTEGER (-3841..3841),
nr-DL-PRS-ExpectedRSTD-Uncertainty-r16
INTEGER (0..246),
nr-DL-PRS-Info-r16 NR-DL-PRS-Info-r16,
...,
[[
prs-OnlyTP-r16 ENUMERATED { true } OPTIONAL -- Need ON
]]
}
NR-DL-PRS-PositioningFrequencyLayer-r16 ::= SEQUENCE {
dl-PRS-SubcarrierSpacing-r16 ENUMERATED {kHz15, kHz30, kHz60, kHz120, ...},
dl-PRS-ResourceBandwidth-r16 INTEGER (1..63),
dl-PRS-StartPRB-r16 INTEGER (0..2176),
dl-PRS-PointA-r16 ARFCN-ValueNR-r15,
dl-PRS-CombSizeN-r16 ENUMERATED {n2, n4, n6, n12, ...},
dl-PRS-CyclicPrefix-r16 ENUMERATED {normal, extended, ...},
}
NR-DL-PRS-SFN0-Offset-r16 ::= SEQUENCE {
sfn-Offset-r16 INTEGER (0..1023),
integerSubframeOffset-r16 INTEGER (0..9),
...} \
-- ASN1STOP
```

[Table 23]

| NR-DL-PRS-AssistanceData field descriptions |
|---|
| **nr-DL-PRS-ReferenceInfo**<br>This field specifies the IDs of the assistance data reference TRP. |
| **nr-DL-PRS-AssistanceDataList**<br>This field specifies the DL-PRS resources for each frequency layer. |
| *nr-SSB-Config*<br>This field specifies the SSB configuration of the TRPs. |
| **nr-DL-PRS-PositioningFrequencyLayer**<br>This field specifies the Positioning Frequency Layer for the *nr-DL-PRS-AssistanceDataPerFreq* field. |
| **nr-DL-PRS-AssistanceDataPerFreq**<br>This field specifies the DL-PRS Resources for the TRPs within the Positioning Frequency Layer. |
| *dl-PRS-ID*<br>This field is used along with a DL-PRS Resource Set ID and a DL-PRS Resource ID to uniquely identify a DL-PRS Resource, and is associated with a single TRP. |
| *nr-PhysCellID*<br>This field specifies the physical cell identity of the TRP. When the field *prs-OnlyTP* is included, this field is not included. |
| **nr-CellGlobalID**<br>This field specifies the NCGI, the globally unique identity of a cell in NR, as defined in TS 38.331 [35]. When the field *prs-OnlyTP* is included, this field is not included. |
| *nr-ARFCN*<br>This field specifies the NR-ARFCN of the TRP's CD-SSB (as defined in TS 38.300 [47]) corresponding to *nr-PhysCellID.*<br>When the field *prs-OnlyTP* is included, this field is not included. |

For example, Table 24 shows an example of PRS configuration.

[Table 24]

| *NR-DL-PRS-Info* field descriptions |
|---|
| **dl-DL-PRS-ResourceSetID**<br>This field specifies the DL-PRS Resource Set ID, which is used to identify the DL-PRS Resource Set of the TRP across all the frequency layers. |
| **dl-PRS-Periodicity-and-ResourceSetSlotOffset**<br>This field specifies the periodicity of DL-PRS allocation in slots configured per DL-PRS Resource Set and the slot offset with respect to SFN #0 slot #0 for a TRP where the DL-PRS Resource Set is configured (i.e. slot where the first DL-PRS Resource of DL-PRS Resource Set occurs). |
| **dl-PRS-ResourceRepetitionFactor**<br>This field specifies how many times each DL-PRS Resource is repeated for a single instance of the DL-PRS Resource Set. It is applied to all resources of the DL-PRS Resource Set. Enumerated values *n2, n4, n6, n8, n16, n32* correspond to 2, 4, 6, 8, 16, 32 resource repetitions, respectively. If this field is absent, the value for *dl-PRS-ResourceRepetitionFactor* is 1 (i.e., no resource repetition). |
| **dl-PRS-ResourceTimeGap**<br>This field specifies the offset in units of slots between two repeated instances of a DL-PRS Resource corresponding to the same DL-PRS Resource ID within a single instance of the DL-PRS Resource Set. The time duration spanned by one DL-PRS Resource Set containing repeated DL-PRS Resources should not exceed DL-PRS-Periodicity. |
| **dl-PRS-NumSymbols**<br>This field specifies the number of symbols per DL-PRS Resource within a slot. |
| **dl-PRS-MutingOption1**<br>This field specifies the DL-PRS muting configuration of the TRP for the Option-1 muting, as specified in TS 38.214 [45], and comprises the following sub-fields:<br>- *dl-prs-MutingBitRepetitionFactor* indicates the number of consecutive instances of the DL-PRS Resource Set corresponding to a single bit of the *nr-option1-muting* bit map. Enumerated values *n1, n2, n4, n8* correspond to 1, 2, 4, 8 consecutive instances, respectively. If this sub-field is absent, the value for *dl-prs-MutingBitRepetitionFactor* is *n1.*<br>- **nr-option1-muting** defines a bitmap of the time locations where the DL-PRS Resource is transmitted (value '1') or not (value '0') for a DL-PRS Resource Set, as specified in TS 38.214 [45]. If this field is absent, Option-1 muting is not in use for the TRP. |
| **dl-PRS-MutingOption2**<br>This field specifies the DL-PRS muting configuration of the TRP for the Option-2 muting, as specified in TS 38.214 [45], and comprises the following sub-fields:<br>- **nr-option2-muting** defines a bitmap of the time locations where the DL-PRS Resource is transmitted (value '1') or not (value '0'). Each bit of the bitmap corresponds to a single repetition of the DL-PRS Resource within an instance of a DL-PRS Resource Set, as specified in TS 38.214 [45]. The size of this bitmap should be the same as the value for *dl-PRS-* |
| *ResourceRepetitionFactor.*<br>If this field is absent, Option-2 muting is not in use for the TRP. |
| **dl-PRS-ResourcePower**<br>This field specifies the average EPRE of the resources elements that carry the PRS in dBm that is used for PRS transmission.<br>The UE assumes constant EPRE is used for all REs of a given DL-PRS resource. |
| **dl-PRS-SequenceID**<br>This field specifies the sequence Id used to initialize cinit value used in pseudo random generator TS 38.211 [41], clause 5.2.1 for generation of DL-PRS sequence for transmission on a given DL-PRS Resource. |
| **dl-PRS-CombSizeN-AndReOffset** |

(continued)

| |
|---|
| This field specifies the Resource Element spacing in each symbol of the DL-PRS Resource and the Resource Element (RE) offset in the frequency domain for the first symbol in a DL-PRS Resource. All DL-PRS Resource Sets belonging to the same<br><br>Positioning Frequency Layer have the same value of comb size. The relative RE offsets of following symbols are defined relative to the RE Offset in the frequency domain of the first symbol in the DL-PRS Resource according to TS 38.211 [41].<br><br>The comb size configuration should be aligned with the comb size configuration for the frequency layer. |
| ***dl-PRS-ResourceSlotOffset***<br><br>This field specifies the starting slot of the DL-PRS Resource with respect to the corresponding DL-PRS-Resource Set Slot Offset. |
| ***dl-PRS-ResourceSymbolOffset***<br><br>This field specifies the starting symbol of the DL-PRS Resource within a slot determined by *dl-PRS-ResourceSlotOffset*. |
| ***dl-PRS-QCL-Info***<br><br>This field specifies the QCL indication with other DL reference signals for serving and neighbouring cells and comprises the following subfields:<br>- ***ssb*** indicates the SSB information for QCL source and comprises the following sub-fields:<br>- ***pci*** specifies the physical cell ID of the cell with the SSB that is configured as the source reference signal for the DL-PRS.<br>The UE obtains the SSB configuration for the SSB configured as source reference signal for the DL-PRS by indexing to the field *nr-SSB-Config* with this physical cell identity.<br>- ***ssb-Index*** indicates the index for the SSB configured as the source reference signal for the DL-PRS.<br>- ***rs-Type*** indicates the QCL type.<br>- ***dl-PRS*** indicates the PRS information for QCL source reference signal and comprises the followings sub-fields:<br>- ***qcl-DL-PRS-ResourceID*** specifies DL-PRS Resource ID of the DL-PRS resource used as the source reference signal.<br>- ***qcl-DL-PRS-ResourceSetID*** indicates the DL-PRS Resource Set ID of the DL-PRS Resource Set used as the source reference signal. |

Hereinafter, the following terms will be used in the context of an embodiment of the present disclosure.

- LMF - location management function
- UE-triggered SL positioning - sidelink (SL) positioning where the procedure is triggered by the UE.
- gNB/LMF-triggered SL positioning - SL positioning where the procedure is triggered by the gNB/LMF
- UE-controlled SL positioning - SL positioning where the SL positioning group is created by the UE
- gNB-controlled SL positioning - SL positioning where the SL positioning group is created by the gNB
- UE-based SL positioning - SL positioning where the UE position is calculated by the UE
- UE-assisted SL positioning - SL positioning where the UE position is calculated by the gNB/LMF
- SL positioning group - UEs that participates in SL positioning
- Target UE (T-UE) - UE whose position is calculated
- Server UE (S-UE) - UE that assists T-UE's positioning
- MG - measurement gap where only SL PRS transmission is allowed
- MW - measurement window where both SL data and SL PRS can be transmitted in a multiplexed way
- SL PRS - sidelink positioning reference signal
- CCH - control channel
- Inter-UE coordination (IUC) message - a message that a TX UE receives from other UEs, including an RX UE, that includes information regarding a set of resources (preferred resource) suitable for transmission and/or information regarding a set of resources (non-preferred resource) not suitable for transmission by the TX UE to the RX UE

Based on an embodiment of the present disclosure, a SL PRS transmission resource may be configured with a SL PRS resource set configured with at least one of the following information.

- SL PRS resource set ID
- SL PRS resource ID list - a list of SL PRS resource IDs in a SL PRS resource set

- SL PRS resource type - which can be set to periodic, aperiodic, semi-persistent or on-demand
- Alpha for SL PRS power control
- P0 for SL PRS power control
- Path loss reference for SL PRS power control - which can be set to SL SSB or DL PRS or UL SRS or UL SRS for positioning or PSCCH DMRS or PSSCH DMRS or PSFCH or SL CSI RS, etc.

Based on an embodiment of the present disclosure, the SL PRS resource set may be configured with a SL PRS resource configured with at least one of the following information.

- SL PRS resource ID
- SL PRS comb size - an interval between REs for SL PRS transmission within a symbol
- SL PRS comb offset - an RE index in which the SL PRS is first transmitted within the first SL PRS symbol
- SL PRS comb cyclic shift - a cyclic shift used to generate a sequence that makes up the SL PRS
- SL PRS start position - an index of the first symbol in which the SL PRS is transmitted within one slot
- # of SL PRS symbols - the number of symbols configured for the SL PRS within one slot
- Freq. domain shift - the lowest frequency position (index) in the frequency domain in which the SL PRS is transmitted
- SL PRS BW - frequency bandwidth used for SL PRS transmission
- SL PRS resource type - which can be set to periodic, aperiodic, semi-persistent or on-demand
- SL PRS periodicity - periodicity in the time domain between SL PRS resources, in a unit of physical slot or a unit of logical slot in a resource pool in which the SL PRS is transmitted
- SL PRS offset - an offset in the time domain to the start of the first SL PRS resource relative to reference timing, in a unit of physical slot or a unit of logical slot in a resource pool in which the SL PRS is transmitted. The reference timing may be SFN=0 or DFN=0 or the time of successful reception or decoding of RRC / MAC-CE / DCI / SCI associated with the SL PRS resource.
- SL PRS sequence ID
- SL PRS spatial relation - which can be set to SL SSB or DL PRS or UL SRS or UL SRS for positioning or PSCCH DMRS or PSSCH DMRS or PSFCH or SL CSI RS, etc.
- SL PRS CCH - SL PRS control channel. It can signal SL PRS resource configuration information, resource location, etc.

Based on an embodiment of the present disclosure, if a resource pool in which a SL PRS for SL positioning is transmitted and a resource pool in which a channel/signal related to the SL PRS is transmitted are different from each other, it may be necessary to define a method for excluding candidate resources in the process of selecting resources for transmitting the SL PRS and the associated channel/signal.

In the present disclosure, a method and operation for excluding candidate resources in the process of selecting SL PRS transmission candidate resources and channel/signal transmission candidate resources related to the SL PRS based on sensing under the described condition(s), and a device supporting the same may be proposed.

For example, when SL positioning is performed, if a SL PRS is transmitted within a resource pool B (e.g., a dedicated resource pool for SL PRS transmission) and a channel/signal related to the SL PRS is transmitted within a resource pool A (e.g., a shared resource pool for transmitting a SL communication channel/signal and positioning triggering/control information, SCI, a measurement result, location information, etc. related to the SL PRS), the UE may select SL PRS transmission resource(s) based on sensing in at least one of the following methods.

For example, in the process of selecting SCI candidate resources within the resource pool A and/or selecting SL PRS candidate resources within the resource pool B, based on an RSRP value measured within the resource pool A and/or an RSRP value measured within the resource pool B, and based on a (pre-)configured RSRP threshold within the resource pool A and/or a (pre-)configured RSRP threshold within the resource pool B, a candidate resource that overlaps with a resource transmitted or reserved by another UE may be excluded by at least one of the following methods.

For example, according to the operation(s) of excluding an SCI candidate resource within the resource pool A based on an embodiment of the present disclosure, the SCI candidate resource may be excluded based on a PSCCH RSRP #1 transmitting 1st SCI of the resource pool A. For example, the SCI candidate resource may be excluded based on the PSCCH RSRP #1 and/or a PSSCH RSRP #2 transmitting 2nd SCI (e.g., measured only for 2nd SCI symbol(s)) of the resource pool A. For example, the maximum/minimum value or the average value of the two RSRP values (the PSCCH RSRP #1 transmitting the 1st SCI and the PSSCH RSRP #2 transmitting the 2nd SCI) may be used as a representative RSRP measurement value for excluding the SCI candidate resource. For example, at least one of the PSCCH RSRP #1 or the PSSCH RSRP #2 may be configured for the resource pool to be used for the resource exclusion operation. For example, the SCI candidate resource may be excluded based on the PSCCH RSRP #1 and/or the PSSCH RSRP #2 of the resource pool A and a SL PRS RSRP #3 of the resource pool B. For example, the resource exclusion may be performed based on the maximum/minimum value or the average value of the RSRP values (the PSCCH RSRP #1 and the PSSCH RSRP #2 of the resource pool A and the SL PRS RSRP #3 of the resource pool B). For example, if the SL PRS RSRP #3 value for the resource pool B is available, and if the number of SL PRS resources and/or symbols within a (pre-)configured window period is greater than or equal to a threshold value, the resource exclusion may be performed based on a representative RSRP value including the SL PRS RSRP #3 value. For example, if the number of SL PRS resources and/or symbols within a (pre-)configured window period is less than or equal to a threshold value, the resource exclusion may be performed based only on the PSCCH RSRP #1 value and/or the PSSCH RSRP #2 value, excluding the SL PRS RSRP #3 value. For example, if RSRP measurement for SL PRS is not performed or is performed only over a short interval within the resource pool B, the resource exclusion may be performed based only on the PSCCH RSRP #1 value and/or the PSSCH RSRP #2 value, excluding the SL PRS RSRP #3 value. For example, if the SL PRS RSRP #3 value is not available, the resource exclusion may be performed based only on the PSCCH RSRP #1 value and/or the PSSCH RSRP #2 value, excluding the SL PRS RSRP #3 value. For example, an RSRP threshold value #1 for the PSSCH RSRP #1 and an RSRP threshold value #2 for the PSCCH RSRP #2 of the resource pool A, and/or an RSRP threshold increment step #1 value and an RSRP threshold increment step #2 value for each of the RSRP threshold values, and/or an RSRP threshold value #3 for the SL PRS RSRP #3 of the resource pool B and/or an RSRP threshold increment step #3 value may be configured separately for each resource pool. For example, the SL PRS RSRP threshold value #3 and/or the RSRP threshold increment step #3 value of the resource pool B may be configured identical to the RSRP threshold value and/or the RSRP threshold increment step value configured for the resource pool A in which the SCI related to the SL PRS is transmitted. For example, by adding a pre-configured offset value to (each of) the threshold value and the threshold increment step value configured for the resource pool A, the resulting values may be used as the RSRP threshold value #3 and the RSRP threshold increment step #3 value for the resource pool B.

For example, according to the operation(s) of excluding a SL PRS candidate resource based on an embodiment of the present disclosure, for example, the SL PRS candidate resource in the resource pool B may be excluded based only on the PSCCH RSRP #1 of the resource pool A. For example, the SL PRS candidate resource in the resource pool B may be excluded based on the PSCCH RSRP #1 and the PSSCH RSRP #2 of the resource pool A. For example, the SL PRS candidate resource in the resource pool B may be excluded based on the maximum/minimum value or the average value of the two RSRP values (the PSCCH RSRP #1 and the PSSCH RSRP #2 of the resource pool A). For example, the SL PRS candidate resource may be excluded based on the PSCCH RSRP #1 and/or the PSSCH RSRP #2 of the resource pool A and the SL PRS RSRP #3 of the resource pool B. For example, the resource exclusion may be performed based on the maximum/minimum value or the average value of the RSRP values. For example, if the SL PRS RSRP #3 value for the resource pool B is available, and if the number of SL PRS resources and/or symbols within a (pre-)configured window period is greater than or equal to a threshold value, the resource exclusion may be performed based on a representative RSRP value including the SL PRS RSRP #3 value. For example, if the number of SL PRS resources and/or symbols within a (pre-)configured window period is less than or equal to a threshold value, the resource exclusion may be performed based only on the PSCCH RSRP #1 value and/or the PSSCH RSRP #2 value, excluding the SL PRS RSRP #3 value. For example, if RSRP measurement for SL PRS is not performed or is performed only over a short interval within the resource pool B, the resource exclusion may be performed based only on the PSCCH RSRP #1 value and the PSSCH RSRP #2 value, excluding the SL PRS RSRP #3 value. For example, if the SL PRS RSRP #3 value is not available, the resource exclusion may be performed based only on the PSCCH RSRP #1 value and/or the PSSCH RSRP #2 value, excluding the SL PRS RSRP #3 value. For example, if the number of candidate resources remaining after excluding candidate resources from each of the resource pools by the (above-described) operation(s) is less than the number of (pre-)configured target/threshold candidate resources for each of the resource pools, for example, only the RSRP threshold related to the resource pool A may be increased by the associated RSRP threshold increment value, and/or candidate resources may be excluded within each of the resource pools according to the (above-described) operation(s). For example, only the RSRP threshold value related to the resource pool B may be increased by the associated RSRP threshold increment value, and/or candidate resources may be excluded from each of the resource pools according to the above-described operation(s), and/or for example, each RSRP threshold value related to the resource pool A and/or the resource pool B may be increased by the associated RSRP threshold increment value, and/or candidate resources may be excluded from each of the resource pools according to the above-described operation(s). For example, based on each channel busy ratio (CBR) value measured within the resource pool A and/or the resource pool B, an RSRP threshold value related to a certain resource pool may be increased by the associated RSRP threshold increment value, and and/or whether to exclude candidate resources within each of the resource pools may be determined according to the above-described operation(s). For example, the operation(s) of increasing the RSRP threshold value may be performed only for a resource pool having a relatively low CBR value and thus a relatively large number of available candidate resources. For example, the operation(s) of increasing the RSRP threshold value may be performed only for a resource pool having a relatively high CBR value and thus a relatively small number of available candidate resources, and/or the SCI and SL PRS candidate resources may be determined conservatively in terms of reception success rate.

Based on various embodiments of the present disclosure, if the resource pool in which the SL PRS for SL positioning is transmitted and the resource pool in which the channel/signal related to the SL PRS is transmitted are different from each other, candidate resources can be efficiently excluded in the process of selecting candidate transmission resources for the SL PRS transmission and the associated channel/signal transmission.

FIG. 17 shows a problem of performing wireless communication related to positioning, based on an embodiment of the present disclosure. The embodiment of FIG. 17 may be combined with various embodiments of the present disclosure.

Referring to FIG. 17, based on an embodiment of the present disclosure, for example, a target UE may be a secure user plane location (UE/SUPL) SUPL Enabled Terminal (SET) that is being positioned. For example, at least one server UE/location server (e.g., a base station, a location management function (LMF), a transmission-reception point (TRP), an enhanced serving mobile location centre (E-SMLC), a secure user plane location (SUPL) SULP location platform (SLP), etc.) may be a physical or logical entity that assists, requests, or manages positioning for the target UE.

For example, the target UE and/or server UE(s) may obtain information related to (SL) PRS (e.g., from the base station, from (pre-)configuration of the target UE/server UE). For example, the information related to the PRS may include at least one of information related to a PRS resource ID, information related to a PRS comb offset, information related to a PRS comb size, information related to a PRS starting symbol, or information related to the number of PRS symbols.

For example, a SL positioning group may be formed between the target UE and the server UE(s).

For example, the target UE may receive control information (e.g., SCI) related to PRS from the server UE through a PSCCH/PSSCH. For example, the control information may include information related to a resource related to the PRS (e.g., time resource assignment, (frequency) resource ID, resource reservation period, etc.). For example, the control information may include information related to a priority.

For example, the target UE may trigger resource selection for a transmission resource for PRS/PSCCH transmission. For example, information related to a priority related to PRS/PSCCH transmission and information related to a resource pool in which a PRS is transmitted may be obtained. For example, the target UE may autonomously select the transmission resource based on the resource allocation mode 2. For example, the target UE may select the transmission resource related to the PRS, etc. within a selection window based on sensing. For example, the target UE may perform sensing within a sensing window. For example, the sensing may include at least one of full sensing, partial sensing (e.g., contiguous partial sensing, and/or periodic-based partial sensing), and random selection. For example, an RSRP threshold may be configured (e.g., based on a priority (value) for transmission and/or a priority (value) included in the received SCI). For example, based on an RSRP measurement (for control information related to the PRS (PSSCH/PSCCH decoding)) within the sensing window being higher than the RSRP threshold, the target UE may perform a resource exclusion operation. For example, based on the number of remaining candidate resources being less than the threshold, the RSRP threshold may be increased by an RSRP increment (e.g., 3 dB, 3 dB for each of the transmission-related priority value and the priority value included in the received SCI). For example, the target UE may perform a sensing/resource exclusion operation based on the increased RSRP threshold. For example, the target UE may select the transmission resource related to the PRS, etc. among the remaining candidate resources. For example, based on the transmission resource related to the PRS, etc., the target UE may transmit control information related to the (SL) PRS to the server UE. For example, based on the transmission resource related to the PRS, etc., the target UE may transmit the (SL) PRS to the server UE. For example, based on (transmission time/reception time of) the (SL) PRS, SL positioning (e.g., RTT/double-side RTT positioning) for the target UE may be performed. For example, information related to the (SL) PRS may be reported from the target UE and/or the server UE to the location server managing positioning of the target UE or to the target UE. For example, the location server and/or the target UE may obtain (e.g., receive/configure, estimate, calculate, compute, verify, or measure) information related to the location of the target UE based on the information related to the (SL) PRS.

Therefore, based on an embodiment of the present disclosure, there may be cases where it is difficult to successfully perform transmission and reception due to congestion in the channel environment even if there are many remaining resources, and in such cases, the RSRP threshold may be fixed, and accordingly, the positioning performance may be critically damaged due to a decoding failure of the channel (e.g., SCI (PSSCH/PSCCH)). On the other hand, based on an embodiment of the present disclosure, there may be cases where transmission and reception are successfully performed even if the remaining resources are limited, due to the channel environment being idle, and even in such cases, if the RSRP threshold is increased (despite the positioning performance being ensured through available transmission and reception), an excessive amount of available resources may be consumed.

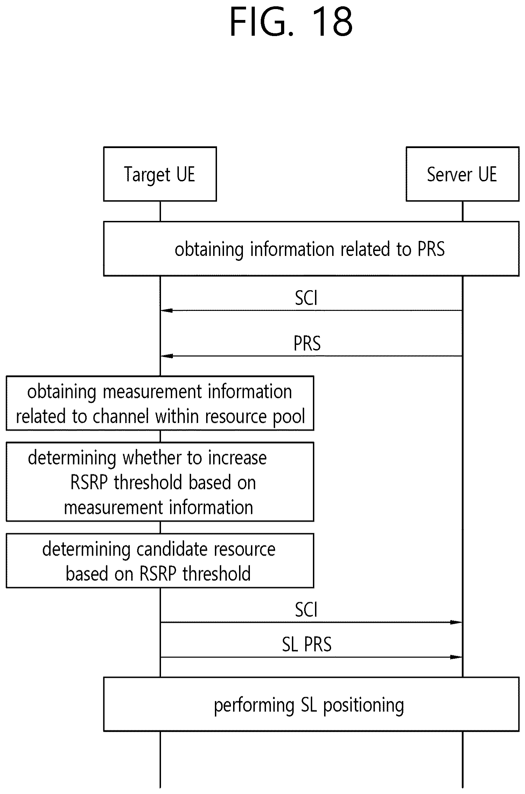

FIG. 18 shows a procedure for performing wireless communication related to positioning, based on an embodiment of the present disclosure. The embodiment of FIG. 18 may be combined with various embodiments of the present disclosure.

Referring to FIG. 18, based on an embodiment of the present disclosure, for example, a target UE may be a secure user plane location (UE/SUPL) SUPL Enabled Terminal (SET) that is being positioned. For example, at least one server UE/location server (e.g., a base station, a location management function (LMF), a transmission-reception point (TRP), an enhanced serving mobile location centre (E-SMLC), a secure user plane location (SUPL) SULP location platform (SLP), etc.) may be a physical or logical entity that assists, requests, or manages positioning for the target UE.

For example, the target UE and/or server UE(s) may obtain information related to (SL) PRS (e.g., from the base station, from (pre-)configuration of the target UE/server UE). For example, the information related to the PRS may include at least one of information related to a PRS resource ID, information related to a PRS comb offset, information related to a PRS comb size, information related to a PRS starting symbol, or information related to the number of PRS symbols.

For example, a SL positioning group may be formed between the target UE and the server UE(s).

For example, the target UE may receive control information (e.g., SCI) related to PRS from the server UE through a PSCCH/PSSCH. For example, the control information may include information related to a resource related to the PRS (e.g., time resource assignment, (frequency) resource ID, resource reservation period, etc.). For example, the control information may include information related to a priority.

For example, the target UE may receive the PRS from the server UE. For example, based on the control information related to the PRS, the target UE may receive the PRS from the server UE.

For example, the target UE may trigger resource selection for a transmission resource for PRS/PSCCH transmission. For example, information related to a priority related to PRS/PSCCH transmission and information related to a resource pool in which a PRS is transmitted may be obtained.

For example, the target UE may obtain measurement information related to a channel within a resource pool (e.g., channel busy ratio (CBR), channel occupancy ratio (CR)). For example, the resource pool(s) may include a dedicated resource pool which is available for PRS transmission and unavailable for physical shared channel transmission, and/or a shared resource pool which is available for both PRS transmission and physical shared channel transmission. For example, the target UE may obtain the measurement information based on a reference signal related to a channel state. For example, the target UE may obtain the measurement information from the server UE, etc.

For example, the target UE may autonomously select the transmission resource based on the resource allocation mode 2. For example, the target UE may select the transmission resource related to the PRS, etc. within a selection window based on sensing. For example, the target UE may perform sensing within a sensing window. For example, the sensing may include at least one of full sensing, partial sensing (e.g., contiguous partial sensing, and/or periodic-based partial sensing), and random selection. For example, an RSRP threshold may be configured (e.g., based on a priority (value) for transmission and/or a priority (value) included in the received SCI). For example, based on an RSRP measurement (for control information related to the PRS (PSSCH/PSCCH decoding)) within the sensing window being higher than the RSRP threshold, the target UE may perform a resource exclusion operation.

For example, the target UE may determine whether to increase or decrease the RSRP threshold (by an RSRP increment, e.g., 3 dB, 3 dB for each of the transmission-related priority value and the priority value included in the received SCI) based on the measurement information related to the channel within the resource pool. For example, the target UE may determine to increase or decrease the RSRP threshold only if the channel within the resource pool is congested. For example, the target UE may determine to increase or decrease the RSRP threshold only if the channel within the resource pool is idle.

For example, the target UE may perform a sensing/resource exclusion operation based on the increased/decreased or non-increased/non-decreased RSRP threshold. For example, the target UE may select the transmission resource related to the PRS, etc. among the remaining candidate resources. For example, based on the transmission resource related to the PRS, etc., the target UE may transmit control information related to the (SL) PRS to the server UE. For example, based on the transmission resource related to the PRS, etc., the target UE may transmit the (SL) PRS to the server UE. For example, based on (transmission time/reception time of) the (SL) PRS, SL positioning (e.g., RTT/double-side RTT positioning) for the target UE may be performed. For example, information related to the (SL) PRS may be reported from the target UE and/or the server UE to the location server managing positioning of the target UE or to the target UE. For example, the location server and/or the target UE may obtain (e.g., receive/configure, estimate, calculate, compute, verify, or measure) information related to the location of the target UE based on the information related to the (SL) PRS.

Therefore, based on an embodiment of the present disclosure, for example, if the channel environment is congested and it is difficult to successfully perform transmission and reception (even if a large amount of remaining resources is available), degradation in positioning performance due to decoding failure of the channel (e.g., SCI (PSSCH/PSCCH)) may be prevented by increasing the RSRP threshold to secure additional resources. Meanwhile, based on an embodiment of the present disclosure, for example, if the channel environment is idle and transmission and reception are successfully performed (even if the remaining resources are limited), excessive consumption of available resources may be prevented by not increasing the RSRP threshold.

For example, whether the rule is applied and/or the proposed method/rule related parameter value of the present disclosure may be configured/allowed specifically (or differently or independently) for a service type. For example, whether the rule is applied and/or the proposed method/rule related parameter value of the present disclosure may be configured/allowed specifically (or differently or independently) for a (LCH or service) priority. For example, whether the rule is applied and/or the proposed method/rule related parameter value of the present disclosure may be configured/allowed specifically (or differently or independently) for a QoS requirement (e.g., latency, reliability, minimum communication range). For example, whether the rule is applied and/or the proposed method/rule related parameter value of the present disclosure may be configured/allowed specifically (or differently or independently) for a PQI parameter. For example, whether the rule is applied and/or the proposed method/rule related parameter value of the present disclosure may be configured/allowed specifically (or differently or independently) for a SL HARQ feedback ENABLED LCH/MAC PDU (transmission). For example, whether the rule is applied and/or the proposed method/rule related parameter value of the present disclosure may be configured/allowed specifically (or differently or independently) for a SL HARQ feedback DISABLED LCH/MAC PDU (transmission). For example, whether the rule is applied and/or the proposed method/rule related parameter value of the present disclosure may be configured/allowed specifically (or differently or independently) for a CBR measurement value of a resource pool. For example, whether the rule is applied and/or the proposed method/rule related parameter value of the present disclosure may be configured/allowed specifically (or differently or independently) for a SL cast type (e.g., unicast, groupcast, broadcast). For example, whether the rule is applied and/or the proposed method/rule related parameter value of the present disclosure may be configured/allowed specifically (or differently or independently) for a SL groupcast HARQ feedback option (e.g., NACK only feedback, ACK/NACK feedback, NACK only feedback based on TX-RX distance). For example, whether the rule is applied and/or the proposed method/rule related parameter value of the present disclosure may be configured/allowed specifically (or differently or independently) for a SL mode 1 CG type (e.g., SL CG type 1 or SL CG type 2). For example, whether the rule is applied and/or the proposed method/rule related parameter value of the present disclosure may be configured/allowed specifically (or differently or independently) for a SL mode type (e.g., mode 1 or mode 2). For example, whether the rule is applied and/or the proposed method/rule related parameter value of the present disclosure may be configured/allowed specifically (or differently or independently) for a resource pool. For example, whether the rule is applied and/or the proposed method/rule related parameter value of the present disclosure may be configured/allowed specifically (or differently or independently) for whether a PSFCH resource is a configured resource pool. For example, whether the rule is applied and/or the proposed method/rule related parameter value of the present disclosure may be configured/allowed specifically (or differently or independently) for a source (L2) ID. For example, whether the rule is applied and/or the proposed method/rule related parameter value of the present disclosure may be configured/allowed specifically (or differently or independently) for a destination (L2) ID. For example, whether the rule is applied and/or the proposed method/rule related parameter value of the present disclosure may be configured/allowed specifically (or differently or independently) for a PC5 RRC connection link. For example, whether the rule is applied and/or the proposed method/rule related parameter value of the present disclosure may be configured/allowed specifically (or differently or independently) for a SL link. For example, whether the rule is applied and/or the proposed method/rule related parameter value of the present disclosure may be configured/allowed specifically (or differently or independently) for a connection state (e.g., RRC CONNECTED state, IDLE state, INACTIVE state) (with a base station). For example, whether the rule is applied and/or the proposed method/rule related parameter value of the present disclosure may be configured/allowed specifically (or differently or independently) for a SL HARQ process (ID). For example, whether the rule is applied and/or the proposed method/rule related parameter value of the present disclosure may be configured/allowed specifically (or differently or independently) for whether to perform SL DRX operation (of TX UE or RX UE). For example, whether the rule is applied and/or the proposed method/rule related parameter value of the present disclosure may be configured/allowed specifically (or differently or independently) for whether a power saving (TX or RX) UE. For example, whether the rule is applied and/or the proposed method/rule related parameter value of the present disclosure may be configured/allowed specifically (or differently or independently) for a case where (from a specific UE perspective) PSFCH TX and PSFCH RX (and/or a plurality of PSFCH TX (exceeding UE capabilities)) overlap (and/or PSFCH TX (and/or PSFCH RX) is omitted). For example, whether the rule is applied and/or the proposed method/rule related parameter value of the present disclosure may be configured/allowed specifically (or differently or independently) for a case where the RX UE actually (successfully) receives PSCCH (and/or PSSCH) (re)transmission from the TX UE.

For example, in the present disclosure, the term "configure/configured (or designate/designated)" may be extended and interpreted as a form in which the base station informs the UE through a pre-defined (physical layer or higher layer) channel/signal (e.g., SIB, RRC, MAC CE) (and/or a form in which the UE informs other UEs through a pre-defined (physical layer or higher layer) channel/signal (e.g., SL MAC CE, PC5 RRC)).

For example, in the present disclosure, the term "PSFCH" may be extended and interpreted as (NR or LTE) PSSCH (and/or (NR or LTE) PSCCH) (and/or (NR or LTE) SL SSB (and/or UL channel/signal)). In addition, the proposed methods of the present disclosure may be used in combination with each other (as a new type).

For example, in the present disclosure, a specific threshold may refer to a threshold pre-defined or (pre-)configured by the network or the base station or the upper layer (including the application layer) of the UE. For example, in the present disclosure, a specific configured threshold may refer to a value pre-defined or (pre-)configured by the network or the base station or the upper layer (including the application layer) of the UE. For example, the operation configured by the network/base station may refer to the operation in which the base station (pre-)configures to the UE through higher layer RRC signaling, configures/signals to the UE through MAC CE, or signals the UE through DCI.

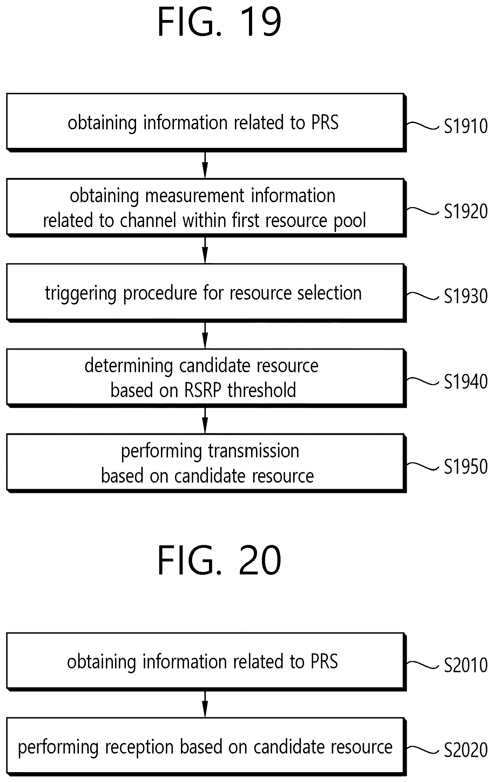

FIG. 19 shows a method for a first device to perform wireless communication, based on an embodiment of the present disclosure. The embodiment of FIG. 19 may be combined with various embodiments of the present disclosure.

Referring to FIG. 19, based on an embodiment of the present disclosure, in step S1910, for example, the first device may obtain information related to a PRS, including at least one of information related to a PRS resource ID, information related to a PRS comb offset, information related to a PRS comb size, information related to a PRS starting symbol, or information related to a number of PRS symbols. In step S1920, for example, the first device may obtain measurement information related to a channel within a first resource pool. In step S1930, for example, the first device may trigger a procedure for resource selection. In step S1940, for example, the first device may determine a candidate resource based on an RSRP threshold. In step S 1950, for example, the first device may perform transmission based on the candidate resource. For example, whether to increase the RSRP threshold may be determined based on the measurement information related to the channel within the first resource pool.

Additionally, or alternatively, the first resource pool may include a shared resource pool which is available for both PRS transmission and physical shared channel transmission.

Additionally, or alternatively, whether to increase the RSRP threshold may be determined based on at least one of the measurement information related to the channel within the first resource pool and measurement information related to a channel within a second resource pool.

Additionally, or alternatively, the second resource pool may include a dedicated resource pool which is available for PRS transmission and unavailable for physical shared channel transmission.

Additionally, or alternatively, the measurement information may include at least one of information related to a channel busy ratio (CBR) or information related to a channel occupancy ratio (CR).

Additionally, or alternatively, based on the CBR being less than a threshold, it may be determined to increase the RSRP threshold.

Additionally, or alternatively, based on the CBR being greater than or equal to a threshold, it may be determined not to increase the RSRP threshold.

Additionally, or alternatively, based on the CBR being greater than or equal to a threshold, it may be determined to increase the RSRP threshold.

Additionally, or alternatively, based on the CBR being less than a threshold, it may be determined not to increase the RSRP threshold.

Additionally, or alternatively, the channel may include a physical channel.

Additionally, or alternatively, the candidate resource may be determined based on an RSRP measurement value related to the physical channel being less than or equal to the RSRP threshold.

Additionally, or alternatively, the candidate resource may be determined based on (i) a first RSRP measurement value related to the channel within the first resource pool and (ii) a second RSRP measurement value related to a channel within a second resource pool.

Additionally, or alternatively, the second resource pool may include a dedicated resource pool which is available for PRS transmission and unavailable for physical shared channel transmission.

Additionally, or alternatively, if a number of remaining candidate resources in a first time domain is less than a threshold, the candidate resource may be determined (i) based on a first RSRP measurement value related to the channel within the first resource pool and (ii) not based on the second RSRP measurement value.

Additionally, or alternatively, the second resource pool may include a dedicated resource pool which is available for PRS transmission and unavailable for physical shared channel transmission.

Additionally, or alternatively, a candidate resource within a second resource pool may be determined based on a first RSRP measurement value related to the channel within the first resource pool.

Additionally, or alternatively, the second resource pool may include a dedicated resource pool which is available for PRS transmission and unavailable for physical shared channel transmission.

Additionally, or alternatively, based on that a second RSRP measurement value related to a channel within a second resource pool is not available, the candidate resource within the second resource pool may be determined based on a first RSRP measurement value related to the channel within the first resource pool and the RSRP threshold.

Additionally, or alternatively, the second resource pool may include a dedicated resource pool which is available for PRS transmission and unavailable for physical shared channel transmission. The proposed method can be applied to devices based on various embodiments of the present disclosure. First, the memory 104 of the first device 100 may store instructions that, based on being executed by the processor 102, cause the first device (e.g., the processor 102, the transceiver 106) to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; triggering a procedure for resource selection; determining a candidate resource based on a reference signal received power (RSRP) threshold; and performing transmission based on the candidate resource, wherein whether to increase the RSRP threshold may be determined based on the measurement information related to the channel within the first resource pool.

Based on an embodiment of the present disclosure, a first device adapted to perform wireless communication is provided. The first device may comprise: at least one transceiver; at least one processor; and at least one memory connected to the at least one processor and storing instructions that, based on being executed by the at least one processor, cause the first device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; triggering a procedure for resource selection; determining a candidate resource based on a reference signal received power (RSRP) threshold; and performing transmission based on the candidate resource, wherein whether to increase the RSRP threshold may be determined based on the measurement information related to the channel within the first resource pool.

Based on an embodiment of the present disclosure, a processing device adapted to control a first device is provided. For example, the processing device may comprise: at least one processor; and at least one memory connected to the at least one processor and storing instructions that, based on being executed by the at least one processor, cause the first device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; triggering a procedure for resource selection; determining a candidate resource based on a reference signal received power (RSRP) threshold; and performing transmission based on the candidate resource, wherein whether to increase the RSRP threshold may be determined based on the measurement information related to the channel within the first resource pool.

Based on an embodiment of the present disclosure, a non-transitory computer-readable storage medium storing instructions is provided. The instructions, when executed, may cause a first device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; triggering a procedure for resource selection; determining a candidate resource based on a reference signal received power (RSRP) threshold; and performing transmission based on the candidate resource, wherein whether to increase the RSRP threshold may be determined based on the measurement information related to the channel within the first resource pool.

FIG. 20 shows a method for a second device to perform wireless communication, based on an embodiment of the present disclosure. The embodiment of FIG. 20 may be combined with various embodiments of the present disclosure.

Referring to FIG. 20, based on an embodiment of the present disclosure, in step S2010, for example, the second device may obtain information related to a positioning reference signal (PRS), including at least one of information related to a PRS resource identity (ID), information related to a PRS comb offset, information related to a PRS comb size, information related to a PRS starting symbol, or information related to a number of PRS symbols. In step S2020, for example, the second device may obtain measurement information related to a channel within a first resource pool. In step S2030, for example, the second device may perform reception based on a candidate resource. For example, a procedure for resource selection may be triggered. For example, the candidate resource may be determined based on a reference signal received power (RSRP) threshold. For example, whether to increase the RSRP threshold may be determined based on the measurement information related to the channel within the first resource pool.

Additionally, or alternatively, the first resource pool may include a shared resource pool which is available for both PRS transmission and physical shared channel transmission.

Additionally, or alternatively, whether to increase the RSRP threshold may be determined based on at least one of the measurement information related to the channel within the first resource pool and measurement information related to a channel within a second resource pool.

Additionally, or alternatively, the second resource pool may include a dedicated resource pool which is available for PRS transmission and unavailable for physical shared channel transmission.

Additionally, or alternatively, the measurement information may include at least one of information related to a channel busy ratio (CBR) or information related to a channel occupancy ratio (CR).

Additionally, or alternatively, based on the CBR being less than a threshold, it may be determined to increase the RSRP threshold.

Additionally, or alternatively, based on the CBR being greater than or equal to a threshold, it may be determined not to increase the RSRP threshold.

Additionally, or alternatively, based on the CBR being greater than or equal to a threshold, it may be determined to increase the RSRP threshold.

Additionally, or alternatively, based on the CBR being less than a threshold, it may be determined not to increase the RSRP threshold.

Additionally, or alternatively, the channel may include a physical channel.

Additionally, or alternatively, the candidate resource may be determined based on an RSRP measurement value related to the physical channel being less than or equal to the RSRP threshold.

Additionally, or alternatively, the candidate resource may be determined based on (i) a first RSRP measurement value related to the channel within the first resource pool and (ii) a second RSRP measurement value related to a channel within a second resource pool.

Additionally, or alternatively, the second resource pool may include a dedicated resource pool which is available for PRS transmission and unavailable for physical shared channel transmission.

Additionally, or alternatively, if a number of remaining candidate resources in a first time domain is less than a threshold, the candidate resource may be determined (i) based on a first RSRP measurement value related to the channel within the first resource pool and (ii) not based on the second RSRP measurement value.

Additionally, or alternatively, the second resource pool may include a dedicated resource pool which is available for PRS transmission and unavailable for physical shared channel transmission.

Additionally, or alternatively, a candidate resource within a second resource pool may be determined based on a first RSRP measurement value related to the channel within the first resource pool.

Additionally, or alternatively, the second resource pool may include a dedicated resource pool which is available for PRS transmission and unavailable for physical shared channel transmission.

Additionally, or alternatively, based on that a second RSRP measurement value related to a channel within a second resource pool is not available, the candidate resource within the second resource pool may be determined based on a first RSRP measurement value related to the channel within the first resource pool and the RSRP threshold.

Additionally, or alternatively, the second resource pool may include a dedicated resource pool which is available for PRS transmission and unavailable for physical shared channel transmission. The proposed method can be applied to devices based on various embodiments of the present disclosure. First, the memory 204 of the second device 200 may store instructions that, based on being executed by the processor 202, cause the second device (e.g., the processor 202, the transceiver 206) to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; and performing reception based on a candidate resource, wherein a procedure for resource selection may be triggered, wherein the candidate resource may be determined based on a reference signal received power (RSRP) threshold, and wherein whether to increase the RSRP threshold may be determined based on the measurement information related to the channel within the first resource pool.

Based on an embodiment of the present disclosure, a second device adapted to perform wireless communication is provided. For example, the second device may comprise: at least one transceiver; at least one processor; and at least one memory connected to the at least one processor and storing instructions that, based on being executed by the at least one processor, cause the second device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; and performing reception based on a candidate resource, wherein a procedure for resource selection may be triggered, wherein the candidate resource may be determined based on a reference signal received power (RSRP) threshold, and wherein whether to increase the RSRP threshold may be determined based on the measurement information related to the channel within the first resource pool.

Based on an embodiment of the present disclosure, a processing device adapted to control a second device is provided. For example, the processing device may comprise: at least one processor; and at least one memory connected to the at least one processor and storing instructions that, based on being executed by the at least one processor, cause the second device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; and performing reception based on a candidate resource, wherein a procedure for resource selection may be triggered, wherein the candidate resource may be determined based on a reference signal received power (RSRP) threshold, and wherein whether to increase the RSRP threshold may be determined based on the measurement information related to the channel within the first resource pool.

Based on an embodiment of the present disclosure, a non-transitory computer-readable storage medium storing instructions is provided. The instructions, when executed, may cause a second device to perform operations. For example, the operations may comprise at least one of: obtaining information related to a positioning reference signal (PRS), including at least one of information related to a PRS resource identity (ID), information related to a PRS comb offset, information related to a PRS comb size, information related to a PRS starting symbol, or information related to a number of PRS symbols; obtaining measurement information related to a channel within a first resource pool; and performing reception based on a candidate resource, wherein a procedure for resource selection may be triggered, wherein the candidate resource may be determined based on a reference signal received power (RSRP) threshold, and wherein whether to increase the RSRP threshold may be determined based on the measurement information related to the channel within the first resource pool.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

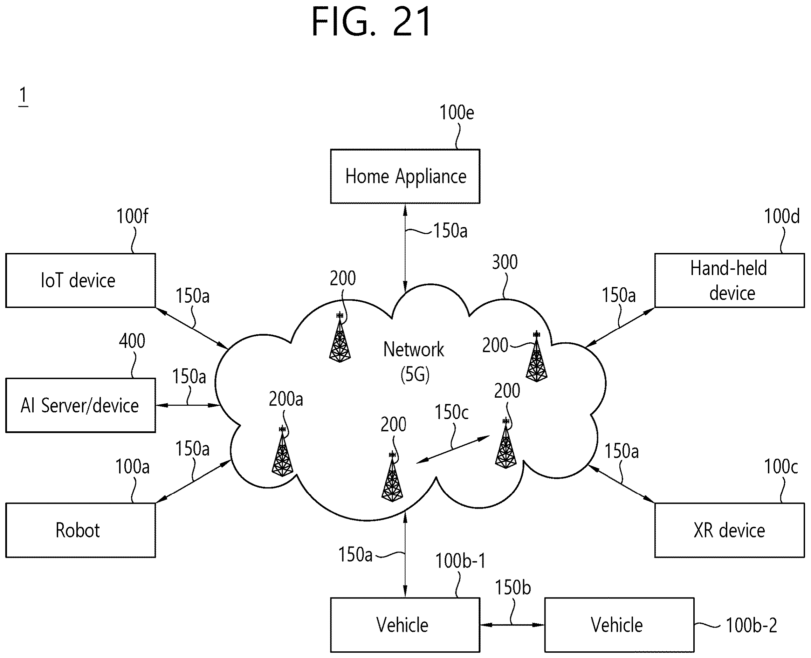

FIG. 21 shows a communication system 1, based on an embodiment of the present disclosure. The embodiment of FIG. 21 may be combined with various embodiments of the present disclosure.

Referring to FIG. 21, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or an Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

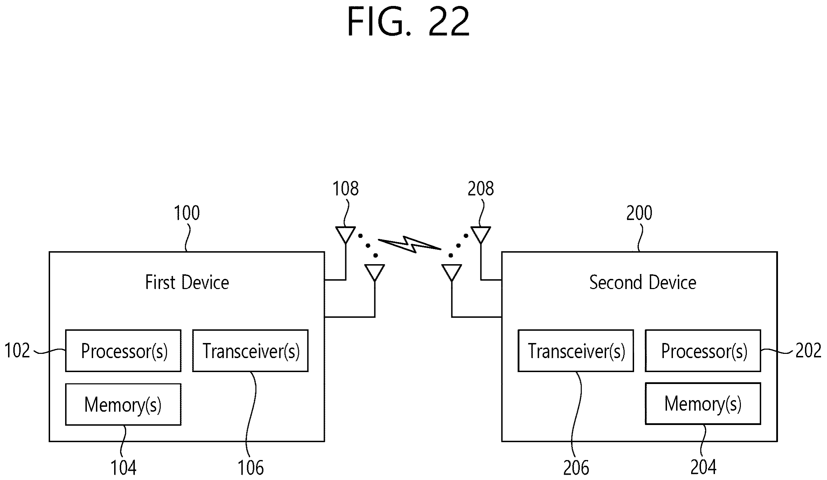

FIG. 22 shows wireless devices, based on an embodiment of the present disclosure. The embodiment of FIG. 22 may be combined with various embodiments of the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cache memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

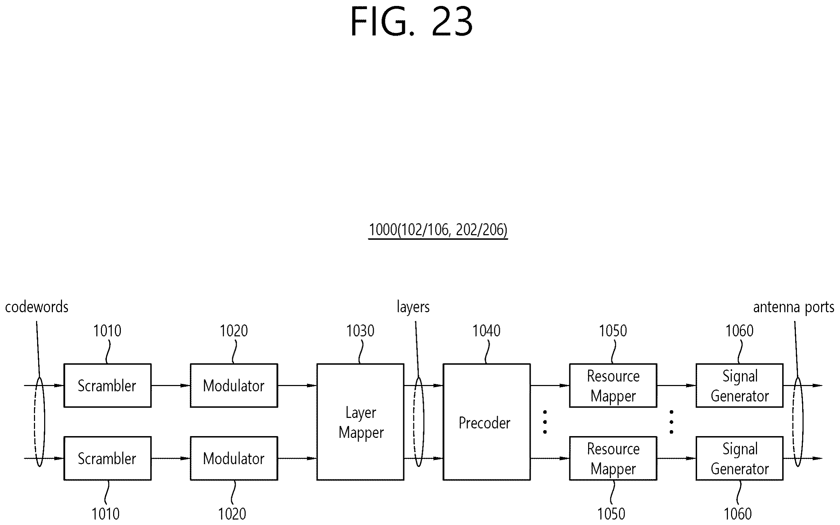

FIG. 23 shows a signal process circuit for a transmission signal, based on an embodiment of the present disclosure. The embodiment of FIG. 23 may be combined with various embodiments of the present disclosure.

Referring to FIG. 23, a signal processing circuit 1000 may include scramblers 1010, modulators 1020, a layer mapper 1030, a precoder 1040, resource mappers 1050, and signal generators 1060. An operation/function of FIG. 23 may be performed, without being limited to, the processors 102 and 202 and/or the transceivers 106 and 206 of FIG. 22. Hardware elements of FIG. 23 may be implemented by the processors 102 and 202 and/or the transceivers 106 and 206 of FIG. 22. For example, blocks 1010 to 1060 may be implemented by the processors 102 and 202 of FIG. 22. Alternatively, the blocks 1010 to 1050 may be implemented by the processors 102 and 202 of FIG. 22 and the block 1060 may be implemented by the transceivers 106 and 206 of FIG. 22.

Codewords may be converted into radio signals via the signal processing circuit 1000 of FIG. 23. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 23. For example, the wireless devices (e.g., 100 and 200 of FIG. 22) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

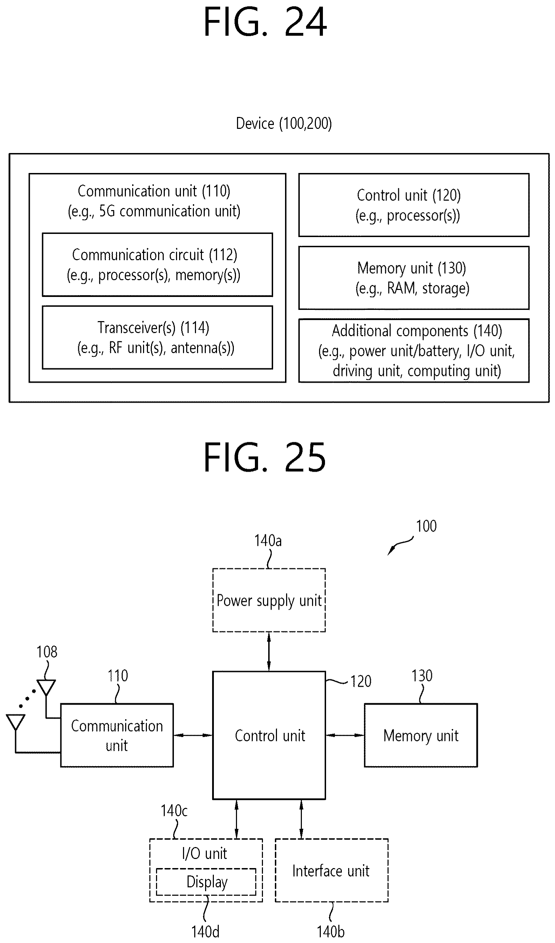

FIG. 24 shows another example of a wireless device, based on an embodiment of the present disclosure. The wireless device may be implemented in various forms according to a use-case/service (refer to FIG. 21). The embodiment of FIG. 24 may be combined with various embodiments of the present disclosure.

Referring to FIG. 24, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 24, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 24 will be described in detail with reference to the drawings.

FIG. 25 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 25 may be combined with various embodiments of the present disclosure.

Referring to FIG. 25, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 24, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

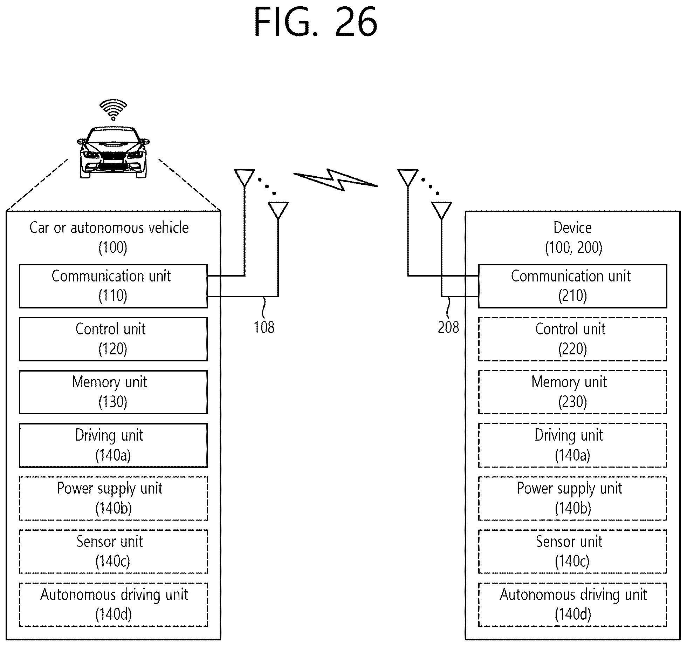

FIG. 26 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 26 may be combined with various embodiments of the present disclosure.

Referring to FIG. 26, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 24, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

**Claims**

1. A method for performing wireless communication by a first device, the method comprising:

    obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
    obtaining measurement information related to a channel within a first resource pool;
    triggering a procedure for resource selection;
    determining a candidate resource based on a reference signal received power (RSRP) threshold; and
    performing transmission based on the candidate resource,
    wherein whether to increase the RSRP threshold is determined based on the measurement information related to the channel within the first resource pool.

2. The method of claim 1, wherein the first resource pool includes a shared resource pool which is available for both PRS transmission and physical shared channel transmission.

3. The method of claim 1, wherein whether to increase the RSRP threshold is determined based on at least one of the measurement information related to the channel within the first resource pool and measurement information related to a channel within a second resource pool, and
    wherein the second resource pool includes a dedicated resource pool which is available for PRS transmission and unavailable for physical shared channel transmission.

4. The method of claim 1, wherein the measurement information includes at least one of information related to a channel busy ratio (CBR) or information related to a channel occupancy ratio (CR).

5. The method of claim 4, wherein, based on the CBR being less than a threshold, it is determined to increase the RSRP threshold.

6. The method of claim 4, wherein, based on the CBR being greater than or equal to a threshold, it is determined not to increase the RSRP threshold.

7. The method of claim 4, wherein, based on the CBR being greater than or equal to a threshold, it is determined to increase the RSRP threshold.

8. The method of claim 4, wherein, based on the CBR being less than a threshold, it is determined not to increase the RSRP threshold.

9. The method of claim 1, wherein the channel includes a physical channel, and
    wherein the candidate resource is determined based on an RSRP measurement value related to the physical channel being less than or equal to the RSRP threshold.

10. The method of claim 1, wherein the candidate resource is determined based on (i) a first RSRP measurement value related to the channel within the first resource pool and (ii) a second RSRP measurement value related to a channel within a second resource pool, and
    wherein the second resource pool includes a dedicated resource pool which is available for PRS transmission and unavailable for physical shared channel transmission.

11. The method of claim 1, wherein, if a number of remaining candidate resources in a first time domain is less than a threshold, the candidate resource is determined (i) based on a first RSRP measurement value related to the channel within the first resource pool and (ii) not based on the second RSRP measurement value, and wherein the second resource pool includes a dedicated resource pool which is available for PRS transmission and unavailable for physical shared channel transmission.

12. The method of claim 1, wherein a candidate resource within a second resource pool is determined based on a first RSRP measurement value related to the channel within the first resource pool, and
wherein the second resource pool includes a dedicated resource pool which is available for PRS transmission and unavailable for physical shared channel transmission.

13. The method of claim 1, wherein, based on that a second RSRP measurement value related to a channel within a second resource pool is not available, the candidate resource within the second resource pool is determined based on a first RSRP measurement value related to the channel within the first resource pool and the RSRP threshold, and
wherein the second resource pool includes a dedicated resource pool which is available for PRS transmission and unavailable for physical shared channel transmission.

14. A first device adapted to perform wireless communication, the first device comprising:

at least one transceiver;
at least one processor; and
at least one memory connected to the at least one processor and storing instructions that, based on being executed by the at least one processor, cause the first device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool;
triggering a procedure for resource selection;
determining a candidate resource based on a reference signal received power (RSRP) threshold; and
performing transmission based on the candidate resource,
wherein whether to increase the RSRP threshold is determined based on the measurement information related to the channel within the first resource pool.

15. A processing device adapted to control a first device, the processing device comprising:

at least one processor; and
at least one memory connected to the at least one processor and storing instructions that, based on being executed by the at least one processor, cause the first device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool;
triggering a procedure for resource selection;
determining a candidate resource based on a reference signal received power (RSRP) threshold; and
performing transmission based on the candidate resource,
wherein whether to increase the RSRP threshold is determined based on the measurement information related to the channel within the first resource pool.

16. A non-transitory computer-readable storage medium storing instructions that, when executed, cause a first device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool;
triggering a procedure for resource selection;

determining a candidate resource based on a reference signal received power (RSRP) threshold; and
performing transmission based on the candidate resource,
wherein whether to increase the RSRP threshold is determined based on the measurement information related to the channel within the first resource pool.

17. A method for performing wireless communication by a second device, the method comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool; and
performing reception based on a candidate resource,
wherein a procedure for resource selection is triggered,
wherein the candidate resource is determined based on a reference signal received power (RSRP) threshold, and
wherein whether to increase the RSRP threshold is determined based on the measurement information related to the channel within the first resource pool.

18. A second device adapted to perform wireless communication, the second device comprising:

at least one transceiver;
at least one processor; and
at least one memory connected to the at least one processor and storing instructions that, based on being executed by the at least one processor, cause the second device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool; and
performing reception based on a candidate resource,
wherein a procedure for resource selection is triggered,
wherein the candidate resource is determined based on a reference signal received power (RSRP) threshold, and
wherein whether to increase the RSRP threshold is determined based on the measurement information related to the channel within the first resource pool.

19. A processing device adapted to control a second device, the processing device comprising:

at least one processor; and
at least one memory connected to the at least one processor and storing instructions that, based on being executed by the at least one processor, cause the second device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;
obtaining measurement information related to a channel within a first resource pool; and
performing reception based on a candidate resource,
wherein a procedure for resource selection is triggered,
wherein the candidate resource is determined based on a reference signal received power (RSRP) threshold, and
wherein whether to increase the RSRP threshold is determined based on the measurement information related to the channel within the first resource pool.

20. A non-transitory computer-readable storage medium storing instructions that, when executed, cause a second device to perform operations comprising:

obtaining information related to a positioning reference signal (PRS), including at least one of information related to a PRS resource identity (ID), information related to a PRS comb offset, information related to a PRS comb size, information related to a PRS starting symbol, or information related to a number of PRS symbols;

obtaining measurement information related to a channel within a first resource pool; and
performing reception based on a candidate resource,
wherein a procedure for resource selection is triggered,
wherein the candidate resource is determined based on a reference signal received power (RSRP) threshold, and
wherein whether to increase the RSRP threshold is determined based on the measurement information related to the channel within the first resource pool.

# FIG. 1

EP 4 661 565 A1

# FIG. 2

|  | Radio | Microwave | Infrared | Visible | Ultraviolet | X-Ray | Gamma-Ray |
|---|---|---|---|---|---|---|---|

mmWave | Terahertz

| Wavelength | $10^8$ m | 1m | 10mm | 1mm | 0.1mm | 700nm | 390nm | 10nm | 0.01nm |
|---|---|---|---|---|---|---|---|---|---|

Radiation Type

| Frequency | 3 Hz | 300 MHz | 30 GHz | 300 GHz | 3 THz | 430 THz | 730 THz | 30 PHz | 30 EHz |
|---|---|---|---|---|---|---|---|---|---|

| Mega : $10^6$ | Giga : $10^9$ | Tera : $10^{12}$ | Peta : $10^{15}$ | Exa : $10^{18}$ |
|---|---|---|---|---|

EP 4 661 565 A1

# FIG. 3

Satellite
(or UAS platform)

Service
link

Feeder link

Data network

Gateway

User
Equipments

Beam foot
print

Field of view of the satellite
(or UAS platform)

# FIG. 4

Satellite
(or UAS platform)

Satellite
(or UAS platform)

ISL

Feeder link

Service
link

Feeder link
(mandatory if on ISL)

Data network

Gateway

User
Equipments

Beam foot
print

Field of view of the satellite
(or UAS platform)

# FIG. 5

(a)

(b)

EP 4 661 565 A1

# FIG. 6

Resource grid

A carrier
(up to 3300 subcarriers,
i.e., 275 RBs)

A BWP

1RB=12 subcarriers

1 RE

1subcarrier

1 symbol

l=0 • • •

k=0

EP 4 661 565 A1

# FIG. 7

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

BS    first UE    second UE          first UE    second UE

resource scheduling  S800

PSCCH  S810              PSCCH  S810

PSSCH  S820              PSSCH  S820

PSFCH  S830              PSFCH  S830

PUCCH/PUSCH  S840

(a)                              (b)

# FIG. 9

(a)　　　　　(b)　　　　　(c)

● : TX UE
⊘ : RX UE

# FIG. 10

GNSS

direct synchronization
with GNSS
(In Coverage)

direct synchronization
with BS

direct synchronization
with GNSS
(Out Coverage)

BS

network coverage

indirect synchronization
with BS

indirect synchronization
with GNSS

independent
synchronization source

EP 4 661 565 A1

# FIG. 11

# FIG. 12

# FIG. 13

UE    NR-Uu / LTE-Uu    NG RAN    NG-C    AMF    NLs    LMF

EP 4 661 565 A1

# FIG. 14

| NG RAN | NG-C | AMF | | NLs | LMF |
|--------|------|-----|-----|-----|-----|

# FIG. 15

BS A
(anchor cell)

BS B

BS C

# FIG. 16

# FIG. 17

EP 4 661 565 A1

# FIG. 18

```
┌──────────────┐                          ┌──────────────┐
│  Target UE   │                          │  Server UE   │
└──────────────┘                          └──────────────┘
```

obtaining information related to PRS

SCI

PRS

obtaining measurement information
related to channel within resource pool

determining whether to increase
RSRP threshold based on
measurement information

determining candidate resource
based on RSRP threshold

SCI

SL PRS

performing SL positioning

60

# FIG. 19

| obtaining information related to PRS | S1910 |
| obtaining measurement information related to channel within first resource pool | S1920 |
| triggering procedure for resource selection | S1930 |
| determining candidate resource based on RSRP threshold | S1940 |
| performing transmission based on candidate resource | S1950 |

# FIG. 20

| obtaining information related to PRS | S2010 |
| performing reception based on candidate resource | S2020 |

FIG. 21

# FIG. 22

# FIG. 23

1000(102/106, 202/206)

codewords      1010      1020      1030    layers    1040      1050      1060    antenna ports

Scrambler → Modulator → Layer Mapper → Precoder → Resource Mapper → Signal Generator

Scrambler → Modulator → Layer Mapper → Precoder → Resource Mapper → Signal Generator

1010      1020                    1050      1060

# FIG. 24

Device (100,200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 25

140a

Power supply unit

108

110

Communication
unit

120

Control unit

130

Memory unit

140c

I/O unit

Display

140d

Interface unit

140b

100

# FIG. 26

**Car or autonomous vehicle (100)**

| |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108

**Device (100, 200)**

| |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

208

## INTERNATIONAL SEARCH REPORT

| | International application No. |
|---|---|
| | **PCT/KR2024/001528** |

| A. | CLASSIFICATION OF SUBJECT MATTER |
|---|---|

**H04W 72/25**(2023.01)i; **H04W 72/53**(2023.01)i; **H04W 72/542**(2023.01)i; **H04W 64/00**(2009.01)i; **H04L 5/00**(2006.01)i; **H04W 92/18**(2009.01)i

According to International Patent Classification (IPC) or to both national classification and IPC

| B. | FIELDS SEARCHED |
|---|---|

Minimum documentation searched (classification system followed by classification symbols)

H04W 72/25(2023.01); H04L 5/00(2006.01); H04W 24/08(2009.01); H04W 56/00(2009.01); H04W 64/00(2009.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PRS, comb offset, comb size, starting symbol, number of PRS symbols, resource pool, measurement, RSRP threshold, increase, candidate resource, shared resource pool, dedicated resource pool, CBR, CR

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2022-034485 A1 (LENOVO (SINGAPORE) PTE. LTD.) 17 February 2022 (2022-02-17)<br>See paragraphs [0084]-[0108]; and claim 1. | 1-20 |
| Y | US 2021-0320777 A1 (QUALCOMM INCORPORATED) 14 October 2021 (2021-10-14)<br>See paragraphs [0081]-[0092]; and claims 1 and 7. | 1-20 |
| Y | OPPO. Discussion on potential solutions for SL positioning. R1-2211447, 3GPP TSG RAN WG1 #111. Toulouse, France. 07 November 2022.<br>See section 2.5. | 2-3,9-13 |
| Y | WO 2022-155262 A1 (IDAC HOLDINGS, INC.) 21 July 2022 (2022-07-21)<br>See paragraphs [0090]-[0287]; and figures 2-11. | 4-8 |
| A | US 2023-0015310 A1 (QUALCOMM INCORPORATED) 19 January 2023 (2023-01-19)<br>See paragraphs [0094]-[0141]; and figures 6-10. | 1-20 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 April 2024** | **30 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/001528**

| Patent document cited in search report | | | Publication date (day/month/year) | Patent family member(s) | | | Publication date (day/month/year) |
|---|---|---|---|---|---|---|---|
| WO | 2022-034485 | A1 | 17 February 2022 | AU | 2021-325422 | A1 | 09 March 2023 |
| | | | | AU | 2021-326057 | A1 | 09 March 2023 |
| | | | | BR | 112023002504 | A2 | 04 April 2023 |
| | | | | BR | 112023002513 | A2 | 04 April 2023 |
| | | | | CA | 3186407 | A1 | 17 February 2022 |
| | | | | CA | 3186670 | A1 | 17 February 2022 |
| | | | | CN | 116018867 | A | 25 April 2023 |
| | | | | CN | 116034285 | A | 28 April 2023 |
| | | | | CN | 116075738 | A | 05 May 2023 |
| | | | | EP | 4193166 | A2 | 14 June 2023 |
| | | | | EP | 4193167 | A2 | 14 June 2023 |
| | | | | EP | 4193731 | A1 | 14 June 2023 |
| | | | | JP | 2023-537985 | A | 06 September 2023 |
| | | | | KR | 10-2023-0048332 | A | 11 April 2023 |
| | | | | KR | 10-2023-0050334 | A | 14 April 2023 |
| | | | | MX | 2023001664 | A | 08 March 2023 |
| | | | | US | 2023-0296752 | A1 | 21 September 2023 |
| | | | | US | 2023-0305099 | A1 | 28 September 2023 |
| | | | | US | 2023-0309066 | A1 | 28 September 2023 |
| | | | | WO | 2022-034483 | A2 | 17 February 2022 |
| | | | | WO | 2022-034483 | A3 | 21 April 2022 |
| | | | | WO | 2022-034484 | A2 | 17 February 2022 |
| | | | | WO | 2022-034484 | A3 | 05 May 2022 |
| US | 2021-0320777 | A1 | 14 October 2021 | US | 11743014 | B2 | 29 August 2023 |
| WO | 2022-155262 | A1 | 21 July 2022 | BR | 112023013883 | A2 | 17 October 2023 |
| | | | | CN | 116803152 | A | 22 September 2023 |
| | | | | EP | 4278732 | A1 | 22 November 2023 |
| | | | | KR | 10-2023-0131293 | A | 12 September 2023 |
| | | | | US | 2024-0056997 | A1 | 15 February 2024 |
| US | 2023-0015310 | A1 | 19 January 2023 | US | 11653325 | B2 | 16 May 2023 |

Form PCT/ISA/210 (patent family annex) (July 2022)